# EUROPEAN PATENT APPLICATION

(11) **EP 4 580 151 A1**
(43) Date of publication of application: **02.07.2025**
(21) Application number: 23870321.9
(22) Date of filing: 13.09.2023
(51) Int. Cl.: H04L 45/00

(54) **PATH FAULT DETECTION METHOD AND RELATED APPARATUS**

(30) Priority: 28.09.2022 CN 202211192245
(71) Applicant: Huawei Technologies Co., Ltd., Shenzhen, Guangdong 518129 (CN)
(72) Inventor: HU, Zhibo, Shenzhen, Guangdong 518129 (CN); DONG, Jiajia, Shenzhen, Guangdong 518129 (CN); XI, Xing, Shenzhen, Guangdong 518129 (CN)
(74) Representative: Gill Jennings & Every LLP
(86) International application number: PCT/CN2023/118427
(87) International publication number: WO 2024/067084

(57) **Abstract**

This application discloses a path fault detection method. The method includes: A network device obtains a first packet, where the first packet includes a segment list, the segment list includes a plurality of sequentially arranged segment identifiers SIDs, the segment list identifies a forwarding path of the first packet, and the segment list includes a segment identifier of a first node and a segment identifier of a second node; the network device forwards the first packet based on the segment list; and the network device detects a status of a target path based on the first packet, where the target path is a shortest path between the first node and the second node. The network device may detect, based on the first packet, the shortest path indicated by the segment list. Therefore, the network device can find in time whether there is a faulty path in the shortest path between the first node and the second node. In this application, traffic can be prevented from being forwarded through a bypass path, to avoid a bandwidth waste and a delay increase, increase available bandwidth of the network device, and improve network data throughput.

## Description

This application claims priority to Chinese Patent Application No. CN202211192245.X, filed with the China National Intellectual Property Administration on September 28, 2022 and entitled "PATH FAULT DETECTION METHOD AND RELATED APPARATUS", which is incorporated herein by reference in its entirety.

### TECHNICAL FIELD

This application relates to the field of communication technologies, and in particular, to a path fault detection method and a related apparatus.

### BACKGROUND

In a service packet forwarding process, a manner of flexibly selecting a forwarding path that is provided by a segment routing (segment routing, SR) node based on a segment routing traffic engineering policy (segment routing traffic engineering policy, SR TE Policy) of Internet Protocol Version6-Segment Routing (Internet Protocol Version6-Segment Routing, IPv6 SR, or SRv6) may meet different forwarding requirements of a user. When there are a plurality of forwarding paths between a head node (for example, a head node of an SR policy) and a destination node, the SR TE Policy can be appropriately used to select a forwarding path. This facilitates network management and planning of management personnel, and effectively reduces forwarding pressure on a network device.

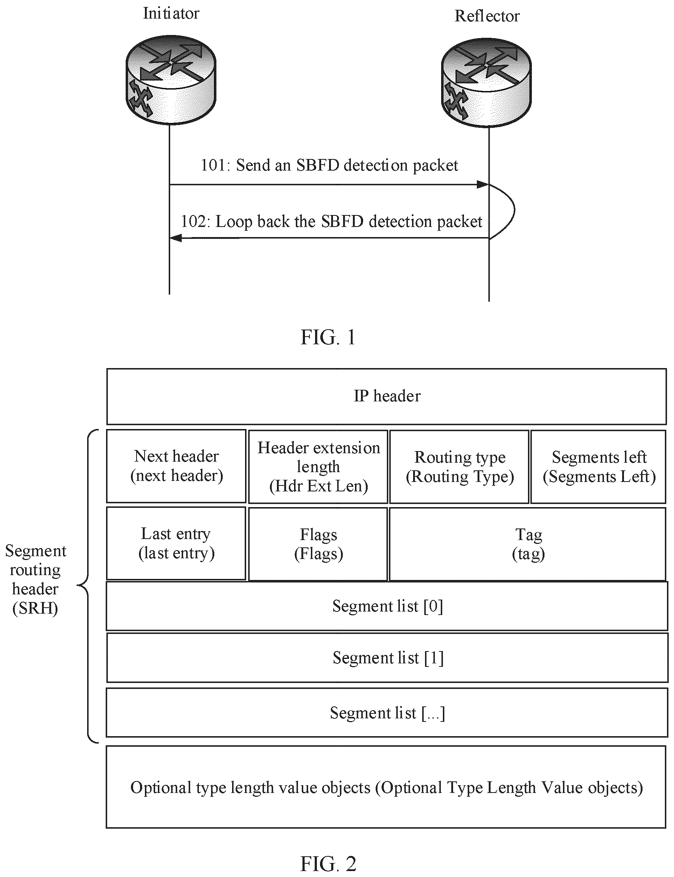

Currently, a commonly used path fault detection method is a bidirectional forwarding detection (bidirectional forwarding detection, BFD) protocol or a seamless bidirectional forwarding detection (Seamless Bidirectional Forwarding Detection, SBFD) protocol. A detection principle of the SBFD protocol is shown in FIG. 1. Nodes are classified into an initiator and a reflector based on functions of the nodes. First, the initiator and the reflector establish a connection by using a negotiation mechanism. The initiator and the reflector send an SBFD control packet (SBFD Control Packet) to each other and advertise information such as an SBFD discriminator (Discriminator). Then, in step 101, when performing path detection, the initiator sends an SBFD control packet to the reflector. In step 102, after receiving the SBFD control packet, the reflector loops back the SBFD control packet to the initiator. When a path between the initiator and the reflector is normal, the initiator can successfully receive the SBFD control packet from the reflector. Therefore, the initiator can detect a status of the path between the initiator and the reflector based on whether the SBFD control packet is received.

In the SR TE policy, the head node is usually used as the initiator in FIG. 1 to detect a path. Specifically, the head node adds a segment routing header (segment routing header, SRH) to the SBFD control packet to indicate that the SBFD control packet is transmitted on a specific SR path. When detecting a fault on a path by using the SBFD control packet, the head node notifies a network controller of a detection result. The network controller completes path convergence based on the detection result. The network controller delivers a new path to the head node, and the new path bypasses the faulty path.

The applicant finds through research that, in some SR path scenarios, an SBFD control packet sent by a head node may bypass a faulty path to reach a destination node, and after receiving the SBFD control packet, the destination node loops back the SBFD control packet to the head node. Therefore, the head node determines that a shortest path between the head node and the destination node is normal, and cannot detect the faulty path.

### SUMMARY

According to a first aspect, an embodiment of this application provides a path fault detection method, including:

A network device obtains a first packet, where the first packet includes a segment list, the segment list includes a plurality of sequentially arranged segment identifiers SIDs, the segment list identifies a forwarding path of the first packet, and the segment list includes a segment identifier of a first node and a segment identifier of a second node; the network device forwards the first packet based on the segment list; and the network device detects a status of a target path based on the first packet, where the target path is a shortest path between the first node and the second node, and a segment identifier that is in the segment list and that identifies the target path indicates a loose path.

Specifically, the segment list of the first packet indicates the forwarding path of the first packet, and the first packet needs to pass through the first node and the second node. The segment list identifies the forwarding path of the first packet. The segment identifier that is in the segment list and that identifies the target path indicates the loose path. In other words, the segment identifier that is in the segment list and that identifies the target path indicates that there may be a plurality of paths between the first node and the second node for forwarding a packet. The loose path means that the segment identifier in the segment list does not strictly indicate all nodes that the packet needs to pass through. For example, the segment identifiers included in the segment list are a SID 1 (a node P1), a SID 2 (a node P2), and a SID 3 (a node PE2). A packet carrying the segment list may reach the node PE2 through nodes PE1, P3, P1, P2, and P8, or may reach the node PE2 through nodes PE1, P3, P1, P2, P1, P3, PE1, P4, P5, P6, and P7. The segment identifiers (the SID 1, the SID 2, and the SID 3) included in the segment list indicate a loose path.

The shortest path between the first node and the second node is referred to as the target path. In this embodiment of this application, the network device detects a status of the target path by forwarding the first packet.

It should be noted that the network device in this embodiment of this application may be a head node in an SR policy (or an SRv6 policy) (a head node for short below), or may be a transit node in an SR policy (or an SRv6 policy) (a transit node for short below). This is not limited in embodiments of this application.

In this embodiment of this application, the first node may be a head node in the SR policy (or the SRv6 policy), or the first node may be a transit node in the SR policy (or the SRv6 policy). The second node may be a transit node in the SR policy (or the SRv6 policy), or may be a tail node in the SR policy (or the SRv6 policy).

In an example, the network device in this embodiment of this application is a head node, and the first node is a head node. In other words, the network device and the first node in this embodiment of this application belong to a same node (namely, the head node).

The path in this embodiment of this application may also be referred to as a link. This is not limited in embodiments of this application.

It should be noted that the path fault detection method provided in this embodiment of this application may be applied to a BFD echo (BFD Echo) mode, or may be applied to a BFD asynchronous mode. When this embodiment of this application is applied to the BFD echo mode, the method provided in this embodiment of this application is applied to an initiator. When this embodiment of this application is applied to the BFD asynchronous mode, for example, if BFD detection is performed between a node A and a node B, and a BFD control packet is sent between the node A and the node B, the method provided in this embodiment of this application is applied to the node A and the node B.

In this embodiment of this application, the network device may detect, based on the first packet, the shortest path indicated by the segment list. Therefore, the network device can find in time whether there is a faulty path in the shortest path between the first node and the second node. This prevents traffic from being forwarded through a bypass path, avoids a bandwidth waste and a delay increase, increases available bandwidth of the network device, and improves network data throughput.

With reference to the first aspect, in a possible implementation of the first aspect, the first packet further includes a first identifier, the first identifier indicates to discard the first packet after N hops of transmission, and N is a positive integer; and a value of the first identifier is decreased by 1 each time the first packet is transmitted by one hop, and when the value of the first identifier is 0, the network device discards the first packet. In this embodiment of this application, a maximum forwarding hop count of the first packet is set, to prevent the first packet from being forwarded to the second node (namely, a destination node) through a bypass path, so that the network device detects the status of the target path based on the first packet.

With reference to the first aspect, in a possible implementation of the first aspect, the network device obtains a total hop count of the target path; and the network device determines the value N of the first identifier based on the total hop count of the target path, where N is greater than or equal to the total hop count of the target path. Specifically, the network device obtains the total hop count of the target path, that is, obtains a quantity of nodes that are passed through on the target path. Then, the network device designs, based on the total hop count of the target path, to discard the first packet after N hops of transmission, where N is a positive integer, and N is greater than or equal to the total hop count of the target path. When the first packet is transmitted on a bypass path, because of a limitation of being discarded after N hops of transmission, the first packet is discarded by a transit node (a transit node corresponding to an N^{th} hop) during transmission. The first packet cannot reach a destination (namely, the second node) of the first packet through the bypass path, and the second node cannot loop back the first packet to a sending end (namely, the head node) through the bypass path. According to the foregoing method, after the network device sends the first packet, if the network device does not receive the looped-back first packet, the network device determines that the status of the target path is faulty.

With reference to the first aspect, in a possible implementation of the first aspect, N may be greater than the total hop count of the target path. For example, the total hop count of the target path is 8, and N=10. According to the foregoing design, the first packet can be forwarded, on a path with a small bypass degree, to a destination node indicated by the segment list. The network device may tolerate the bypass path with the small bypass degree, to avoid frequent end-to-end path switching.

With reference to the first aspect, in a possible implementation of the first aspect, when the network device is the head node, and the first node is the head node, that is, the network device is the first node, N is greater than or equal to the total hop count of the target path. For example, the total hop count of the target path is 5. In this case, N is greater than or equal to 5.

With reference to the first aspect, in a possible implementation of the first aspect, when the network device is the head node, and the first node is the transit node, N is greater than or equal to a sum of the total hop count of the target path and a hop count from the head node to the first node. For example, a shortest path between the head node (the network device) and the first node is three hops, and the total hop count of the target path is five hops. In this case, N is greater than or equal to 8.

With reference to the first aspect, in a possible implementation of the first aspect, that a network device obtains a first packet includes: The network device obtains a second packet, where the second packet includes the segment list; and the network device fills the first identifier in the second packet, to generate the first packet.

Specifically, the network device obtains the second packet, and the second packet may be considered as a first packet that is not filled with the value of the first identifier. Then, the network device determines the value N based on the total hop count of the target path. The network device fills the first identifier (that is, fills the value N in the first identifier) in the second packet, to generate the first packet.

With reference to the first aspect, in a possible implementation of the first aspect, the method further includes: The network device performs committed access rate (committed access rate, CAR)-based control on the first packet, where the CAR-based control on the first packet indicates that a threshold of a transmission rate of the first packet per unit time is M, and M is a positive integer. Specifically, at an interface of the network device, packets are classified through CAR configuration, to control a data stream to be transmitted at a specific rate. To avoid a large amount of retransmission of the first packet that affects another service, the CAR-based control may be performed on the first packet to limit a transmission rate of the first packet.

With reference to the first aspect, in a possible implementation of the first aspect, the first identifier is carried in a time to live TTL field of an internet protocol version 4 IPv4 header of the first packet; or the first identifier is carried in a hop limit Hop limit field of an internet protocol version 6 IPv6 header of the first packet.

With reference to the first aspect, in a possible implementation of the first aspect, the first packet further includes a second identifier, and the second identifier indicates the network device to detect whether an inbound interface for receiving the first packet is consistent with an outbound interface for sending the first packet. Specifically, after receiving the first packet that carries the second identifier, the network device detects whether the inbound interface of the first packet is consistent with the outbound interface of the first packet. Whether to discard the first packet is determined based on whether the inbound interface of the first packet is consistent with the outbound interface of the first packet. The first packet is prevented from being forwarded from a same port. In other words, the first packet is prevented from being forwarded to the second node (namely, the destination node) through a bypass path.

With reference to the first aspect, in a possible implementation of the first aspect, the first packet further includes a second identifier, and the second identifier includes the outbound interface of the first packet. After receiving the first packet, the network device obtains the inbound interface of the first packet. Then, the network device detects whether the inbound interface of the first packet is consistent with the second identifier (the outbound interface of the first packet). Whether to discard the first packet is determined based on whether the inbound interface of the first packet is consistent with the outbound interface of the first packet. The first packet is prevented from being forwarded from a same port. In other words, the first packet is prevented from being forwarded to the second node (namely, the destination node) through a bypass path.

With reference to the first aspect, in a possible implementation of the first aspect, that the network device forwards the first packet based on the segment list includes: The network device detects, based on the second identifier, whether the inbound interface for receiving the first packet is consistent with the outbound interface for receiving the first packet; and the network device discards the first packet when the network device detects that the inbound interface for receiving the first packet is consistent with the outbound interface for sending the first packet; or the network device forwards the first packet based on the segment list when the network device detects that the inbound interface for receiving the first packet is inconsistent with the outbound interface for sending the first packet.

With reference to the first aspect, in a possible implementation of the first aspect, the second identifier is carried in a flags Flags field of a segment routing header SRH of the first packet. For example, a specific bit (for example, a first bit) in the flags Flags field is used as the second identifier. When the specific bit in the flags Flags field is 1, the network device needs to detect whether the outbound interface of the first packet is consistent with the inbound interface of the first packet, and determine, based on a detection result, whether to discard the first packet. When the specific bit in the flags Flags field is 0, the network device forwards the first packet according to a normal procedure, that is, does not need to detect whether the outbound interface of the first packet is consistent with the inbound interface of the first packet.

With reference to the first aspect, in a possible implementation of the first aspect, that the network device detects a status of a target path based on the first packet includes: When the network device receives the first packet from the second node, the network device determines that the status of the target path is normal; or when the network device does not receive the first packet from the second node, the network device determines that the status of the target path is faulty.

With reference to the first aspect, in a possible implementation of the first aspect, the first packet is a bidirectional forwarding detection BFD protocol packet, or the first packet is a seamless bidirectional forwarding detection SBFD protocol packet.

According to a second aspect, an embodiment of this application provides a path fault detection method, including:

A network device obtains a segment list, where the segment list includes a segment identifier of a first node and a segment identifier of a second node, the segment list indicates a target path, and the target path is a shortest path between the first node and the second node.

The network device obtains a second path through calculation based on the segment list and path status information, where the second path is a shortest path that is between the first node and the second node and that includes no faulty path, and the path status information indicates a faulty path.

The network device detects a status of the target path based on the second path.

Specifically, the network device determines the first node and the second node (or more other nodes) based on the segment list. Then, the network device calculates the shortest path between the first node and the second node, namely, the target path, based on a shortest path tree (shortest path tree, SPT). The network device obtains the path status information. The path status information indicates a status of each path in a current network, that is, the path status information indicates the faulty path. Then, the network device calculates, based on the segment list and the path status information, an actually reachable path between the first node and the second node, where the path is also referred to as the second path. The second path is the shortest path that is between the first node and the second node and that does not include the faulty path.

In this embodiment of this application, the network device obtains the path status information, and the network device detects, based on the path status information, the status of the shortest path indicated by the segment list. Therefore, the network device can find in time whether there is the faulty path in the shortest path between the first node and the second node. This prevents traffic from being forwarded through a bypass path, increases available bandwidth of the network device, and improves network data throughput.

With reference to the second aspect, in a possible implementation of the second aspect, that the network device detects a status of the target path based on the second path includes: When the second path traverses repeated nodes, the network device determines that the status of the target path is faulty; or when the target path does not traverse repeated nodes, the network device determines that the status of the target path is normal.

With reference to the second aspect, in a possible implementation of the second aspect, the network device obtains the path status information from a link state database (Link State Database, LSDB) and/or a segment routing database (Segment Routing Database, SRDB).

According to a third aspect, an embodiment of this application provides a network device, including:
a transceiver module, configured to obtain, by the network device, a first packet, where the first packet includes a segment list, the segment list includes a plurality of sequentially arranged segment identifiers SIDs, the segment list identifies a forwarding path of the first packet, and the segment list includes a segment identifier of a first node and a segment identifier of a second node; and
the transceiver module is further configured to forward the first packet based on the segment list; and
a processing module, configured to detect a status of a target path based on the first packet, where the target path is a shortest path between the first node and the second node, and a segment identifier that is in the segment list and that identifies the target path indicates a loose path.

In a possible implementation, the first packet further includes a first identifier, the first identifier indicates to discard the first packet after N hops of transmission, and N is a positive integer; and a value of the first identifier is decreased by 1 each time the first packet is transmitted by one hop, and when the value of the first identifier is 0, the network device discards the first packet.

In a possible implementation, the transceiver module is further configured to obtain a total hop count of the target path.

The processing module is further configured to determine the value N of the first identifier based on the total hop count of the target path, where N is greater than or equal to the total hop count of the target path.

In a possible implementation, the transceiver module is further configured to obtain a second packet, where the second packet includes the segment list.

The processing module is further configured to fill the first identifier in the second packet, to generate the first packet.

In a possible implementation, the processing module is further configured to perform committed access rate CAR-based control on the first packet, where a CAR-based control indicates that a threshold of a transmission rate of the first packet per unit time is M, and M is a positive integer.

In a possible implementation, the first identifier is carried in a time to live TTL field of an internet protocol version 4 IPv4 header of the first packet.

Alternatively, the first identifier is carried in a hop limit Hop limit field of an internet protocol version 6 IPv6 header of the first packet.

In a possible implementation, the first packet further includes a second identifier, and the second identifier indicates the network device to detect whether an inbound interface for receiving the first packet is consistent with an outbound interface for sending the first packet.

In a possible implementation, the processing module is further configured to detect, based on the second identifier, whether the inbound interface for receiving the first packet is consistent with the outbound interface for receiving the first packet.

The transceiver module is further configured to discard, by the network device, the first packet when the network device detects that the inbound interface for receiving the first packet is consistent with the outbound interface for sending the first packet.

The transceiver module is further configured to forward, by the network device, the first packet based on the segment list when the network device detects that the inbound interface for receiving the first packet is inconsistent with the outbound interface for sending the first packet.

In a possible implementation, the second identifier is carried in a flags Flags field of a segment routing header SRH of the first packet.

In a possible implementation, the processing module is further configured to: when the network device receives the first packet from the second node, determine, by the network device, that the status of the target path is normal.

The processing module is further configured to: when the network device does not receive the first packet from the second node, determine, by the network device, that the status of the target path is faulty.

In a possible implementation, the first packet is a bidirectional forwarding detection BFD protocol packet, or the first packet is a seamless bidirectional forwarding detection SBFD protocol packet.

According to a fourth aspect, an embodiment of this application provides a communication apparatus, including: a communication interface; and
a processor connected to the communication interface.

The communication interface is configured to obtain, by a network device, a first packet.

The first packet includes a segment list, the segment list includes a plurality of sequentially arranged segment identifiers SIDs, the segment list identifies a forwarding path of the first packet, and the segment list includes a segment identifier of a first node and a segment identifier of a second node.

The communication interface is further configured to forward the first packet based on the segment list.

The processor is configured to detect a status of a target path based on the first packet, where the target path is a shortest path between the first node and the second node, and a segment identifier that is in the segment list and that identifies the target path indicates a loose path.

In a possible implementation, the first packet further includes a first identifier, the first identifier indicates to discard the first packet after N hops of transmission, and N is a positive integer; and a value of the first identifier is decreased by 1 each time the first packet is transmitted by one hop, and when the value of the first identifier is 0, the network device discards the first packet.

In a possible implementation, the communication interface is further configured to obtain a total hop count of the target path.

The processor is further configured to determine the value N of the first identifier based on the total hop count of the target path, where N is greater than or equal to the total hop count of the target path.

In a possible implementation, the communication interface is further configured to obtain a second packet, where the second packet includes the segment list.

The processor is further configured to fill the first identifier in the second packet, to generate the first packet.

In a possible implementation, the processor is further configured to perform committed access rate CAR-based control on the first packet, where a CAR-based control indicates that a threshold of a transmission rate of the first packet per unit time is M, and M is a positive integer.

In a possible implementation, the first identifier is carried in a time to live TTL field of an internet protocol version 4 IPv4 header of the first packet, or the first identifier is carried in a hop limit Hop limit field of an internet protocol version 6 IPv6 header of the first packet.

In a possible implementation, the first packet further includes a second identifier, and the second identifier indicates the network device to detect whether an inbound interface for receiving the first packet is consistent with an outbound interface for sending the first packet.

In a possible implementation,
the processor is further configured to detect, based on the second identifier, whether the inbound interface for receiving the first packet is consistent with the outbound interface for receiving the first packet.

The communication interface is further configured to discard, by the network device, the first packet when the network device detects that the inbound interface for receiving the first packet is consistent with the outbound interface for sending the first packet.

The communication interface is further configured to forward, by the network device, the first packet based on the segment list when the network device detects that the inbound interface for receiving the first packet is inconsistent with the outbound interface for sending the first packet.

In a possible implementation, the second identifier is carried in a flags Flags field of a segment routing header SRH of the first packet.

In a possible implementation, the processor is further configured to: when the network device receives the first packet from the second node, determine, by the network device, that the status of the target path is normal.

The processor is further configured to: when the network device does not receive the first packet from the second node, determine, by the network device, that the status of the target path is faulty.

In a possible implementation, the first packet is a bidirectional forwarding detection BFD protocol packet, or the first packet is a seamless bidirectional forwarding detection SBFD protocol packet.

According to a fifth aspect, an embodiment of this application provides a network device, including:
a transceiver module, configured to obtain a segment list, where the segment list includes a segment identifier of a first node and a segment identifier of a second node, the segment list indicates a target path, and the target path is a shortest path between the first node and the second node; and
a processing module, configured to obtain a second path through calculation based on the segment list and path status information, where the second path is a shortest path that is between the first node and the second node and that includes no faulty path, and the path status information indicates a faulty path.

The processing module is further configured to detect a status of the target path based on the second path.

In a possible implementation, the processing module is further configured to: when the second path traverses repeated nodes, determine that the status of the target path is faulty.

The processing module is further configured to: when the target path does not traverse repeated nodes, determine that the status of the target path is normal.

In a possible implementation, the transceiver module is further configured to obtain the path status information from a link state database (Link State Database, LSDB) and/or a segment routing database (Segment Routing Database, SRDB).

According to a sixth aspect, an embodiment of this application provides a communication apparatus, including: a communication interface; and
a processor connected to the communication interface.

The communication interface is configured to obtain a segment list, where the segment list includes a segment identifier of a first node and a segment identifier of a second node, the segment list indicates a target path, and the target path is a shortest path between the first node and the second node.

The processor is configured to obtain a second path through calculation based on the segment list and path status information, where the second path is a shortest path that is between the first node and the second node and that includes no faulty path, and the path status information indicates a faulty path.

The processor is further configured to detect a status of the target path based on the second path.

In a possible implementation, the processor is further configured to: when the second path traverses repeated nodes, determine that the status of the target path is faulty.

The processor is further configured to: when the target path does not traverse repeated nodes, determine that the status of the target path is normal.

In a possible implementation, the communication interface is further configured to obtain the path status information from a link state database (Link State Database, LSDB) and/or a segment routing database (Segment Routing Database, SRDB).

According to a seventh aspect, an embodiment of this application provides a path fault detection method, including:

A network device obtains a first packet, where the first packet includes a segment list, and the segment list includes a plurality of sequentially arranged segment identifiers SIDs.

The segment list includes forwarding information of each node that a target path traverses, and the target path is a shortest path between a first node and a second node.

The network device forwards the first packet based on the segment list.

The network device detects a status of the target path based on the first packet.

Specifically, the segment list of the first packet indicates a forwarding path of the first packet, and the first packet needs to pass through the first node and the second node. The segment list includes the forwarding information of each node that the target path traverses, and the target path is the shortest path between the first node and the second node. In other words, the segment list indicates a strict path. In this embodiment of this application, the network device detects the status of the target path by forwarding the first packet.

It should be noted that the network device in this embodiment of this application may be a head node in an SR policy (or an SRv6 policy) (a head node for short below), or may be a transit node in an SR policy (or an SRv6 policy) (a transit node for short below). This is not limited in embodiments of this application.

In this embodiment of this application, the first node may be a head node in the SR policy (or the SRv6 policy), or the first node may be a transit node in the SR policy (or the SRv6 policy). The second node may be a transit node in the SR policy (or the SRv6 policy), or may be a tail node in the SR policy (or the SRv6 policy).

In an example, the network device in this embodiment of this application is a head node, and the first node is a head node. In other words, the network device and the first node in this embodiment of this application belong to a same node (namely, the head node).

The path in this embodiment of this application may also be referred to as a link. This is not limited in embodiments of this application.

In this embodiment of this application, the network device forwards the first packet on the strict path based on the segment list of the first packet. Under an indication of the segment list of the first packet, the first packet cannot reach the second node through a loose path between the first node and the second node. Therefore, the network device can find in time whether there is a faulty path in the shortest path between the first node and the second node. This prevents traffic from being forwarded through a bypass path, avoids a bandwidth waste and a delay increase, increases available bandwidth of the network device, and improves network data throughput.

With reference to the seventh aspect, in a possible implementation of the seventh aspect, the network device obtains a third packet, where a segment list of the third packet includes a plurality of sequentially arranged segment identifiers, and the segment list of the third packet indicates a plurality of forwarding paths of the third packet.

The network device forwards the third packet based on the segment list of the third packet.

In a possible implementation, the third packet carries service data. In other words, the third packet is a service packet. The segment list of the service packet indicates the plurality of forwarding paths of the third packet. In other words, a path indicated by the segment list of the service packet is a loose path. Therefore, the network device forwards the service packet on the loose path. In this way, the service packet can reach a destination and a service can run normally.

With reference to the seventh aspect, in a possible implementation of the seventh aspect, the forwarding information includes a segment identifier of the node and/or an adjacency segment identifier of the node. For example, the forwarding information may be an adjacency segment identifier End.X SID (SIDX for short) of the node. The End.X SID indicates an outbound interface of a node. The network device determines an outbound interface for forwarding the packet based on the End.X SID.

With reference to the seventh aspect, in a possible implementation of the seventh aspect, that the network device forwards the first packet based on the segment list includes: When the network device determines that a next hop of the network device in the segment list is unreachable, the network device discards the first packet; or when the network device determines that a next hop of the network device in the segment list is reachable, the network device forwards the first packet based on the segment list.

With reference to the seventh aspect, in a possible implementation of the seventh aspect, the first packet further includes a third identifier, and the third identifier indicates that fast reroute FRR is not performed for the first packet. Specifically, to further ensure that the first packet is forwarded based on the segment list (the segment list indicates the strict path), the third identifier is added to the first packet, where the third identifier indicates that fast reroute (fast reroute, FRR) is not performed for the first packet. For example, the third identifier is carried in a flags Flags field of an SRH of the first packet.

According to an eighth aspect, an embodiment of this application provides a network device, including:
a transceiver module, configured to obtain a first packet, where the first packet includes a segment list, and the segment list includes a plurality of sequentially arranged segment identifiers SIDs;
the segment list includes forwarding information of each node that a target path traverses, and the target path is a shortest path between the first node and the second node; and
the transceiver module is further configured to forward the first packet based on the segment list; and
a processing module, configured to detect a status of the target path based on the first packet.

In a possible implementation, the transceiver module is further configured to obtain a third packet, where a segment list of the third packet includes a plurality of sequentially arranged segment identifiers, and the segment list of the third packet indicates a plurality of forwarding paths of the third packet.

The transceiver module is further configured to forward the third packet based on the segment list of the third packet.

In a possible implementation, the forwarding information includes a segment identifier of the node and/or an adjacency segment identifier of the node.

In a possible implementation, the processing module is further configured to discard the first packet when the network device determines that a next hop of the network device in the segment list is unreachable.

The processing module is further configured to forward the first packet based on the segment list when the network device determines that a next hop of the network device in the segment list is reachable.

In a possible implementation, the first packet further includes a third identifier, and the third identifier indicates that fast reroute FRR is not performed in a forwarding process of the first packet.

In a possible implementation, the third identifier is carried in a flags Flags field of a segment routing header SRH of the first packet.

According to a ninth aspect, an embodiment of this application provides a communication apparatus, including: a communication interface; and
a processor connected to the communication interface.

The communication interface is configured to obtain a first packet, where the first packet includes a segment list, and the segment list includes a plurality of sequentially arranged segment identifiers SIDs.

The segment list includes forwarding information of each node that a target path traverses, and the target path is a shortest path between a first node and a second node.

The communication interface is further configured to forward the first packet based on the segment list.

The processor is configured to detect a status of the target path based on the first packet.

In a possible implementation,
the communication interface is further configured to obtain a third packet, where a segment list of the third packet includes a plurality of sequentially arranged segment identifiers, and the segment list of the third packet indicates a plurality of forwarding paths of the third packet.

The communication interface is further configured to forward the third packet based on the segment list of the third packet.

In a possible implementation, the forwarding information includes a segment identifier of the node and/or an adjacency segment identifier of the node.

In a possible implementation, the processor is further configured to discard the first packet when the network device determines that a next hop of the network device in the segment list is unreachable.

The processor is further configured to forward the first packet based on the segment list when the network device determines that a next hop of the network device in the segment list is reachable.

In a possible implementation, the first packet further includes a third identifier, and the third identifier indicates that fast reroute FRR is not performed in a forwarding process of the first packet.

In a possible implementation, the third identifier is carried in a flags Flags field of a segment routing header SRH of the first packet.

According to a tenth aspect, a communication system is provided, and the communication system includes the network device according to the third aspect or the communication apparatus according to the fourth aspect.

According to an eleventh aspect, a communication system is provided, and the communication system includes the network device according to the fifth aspect or the communication apparatus according to the sixth aspect.

According to a twelfth aspect, a communication system is provided, and the communication system includes the network device according to the eighth aspect or the communication apparatus according to the ninth aspect.

A thirteenth aspect of this application provides a computer storage medium. The computer storage medium may be non-volatile. The computer storage medium stores computer-readable instructions. When the computer-readable instructions are executed by a processor, the method according to any one of the implementations of the first aspect, the second aspect, or the seventh aspect is implemented.

A fourteenth aspect of this application provides a computer program product including instructions. When the computer program product runs on a computer, the computer is enabled to perform the method according to any one of the implementations of the first aspect, the second aspect, or the seventh aspect.

A fifteenth aspect of this application provides a chip system. The chip system includes a processor and an interface circuit, and is configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete device.

### BRIEF DESCRIPTION OF DRAWINGS

FIG. 1 is a diagram of SBFD;
FIG. 2 is a diagram of an example of a packet format according to an embodiment of this application;
FIG. 3 is a diagram of a communication scenario;
FIG. 4 is a diagram of an embodiment of a path fault detection method according to an embodiment of this application;
FIG. 5 is a diagram of an embodiment of a path fault detection method according to an embodiment of this application;
FIG. 6 is a diagram of another communication scenario according to an embodiment of this application;
FIG. 7 is a diagram of a structure of an IPv4 header;
FIG. 8 is a diagram of a structure of an IPv6 header;
FIG. 9 is a diagram of an application scenario according to an embodiment of this application;
FIG. 10 is a diagram of an application scenario according to an embodiment of this application;
FIG. 11 is a diagram of a structure of a first packet according to an embodiment of this application;
FIG. 12 is a diagram of a structure of a first packet according to an embodiment of this application;
FIG. 13 is a diagram of an application scenario according to an embodiment of this application;
FIG. 14 is a diagram of a structure of a communication apparatus 1400 according to an embodiment of this application;
FIG. 15 is a diagram of a structure of a communication apparatus 1500 according to an embodiment of this application;
FIG. 16 is a diagram of a structure of a communication apparatus 1600 according to an embodiment of this application; and
FIG. 17 is a diagram of a network system 1700 according to an embodiment of this application.

### DESCRIPTION OF EMBODIMENTS

The following describes embodiments of this application. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. Moreover, the terms "include", "have" and any other variants mean to cover the non-exclusive inclusion. For example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effect can be achieved. Unit division in this application is logical division. During actual application, there may be another division manner during implementation. For example, a plurality of units may be combined into or integrated into another system, or some features may be ignored or may not be performed. In addition, the displayed or discussed mutual couplings, direct couplings, or communication connections may be implemented through some interfaces. The indirect couplings or communication connections between the units may be implemented in an electrical form or another similar form. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

First, some technical concepts in embodiments of this application are described.

### 1. Segment routing (segment routing, SR)

Segment routing is a protocol designed based on the concept of source routing to forward a data packet in a network. The SR divides a network path into segments and allocates segment identifiers (segment IDs, SIDs) to the segments and network nodes. A segment list (SID List, also referred to as a label stack in SR-MPLS) may be obtained by sorting the SIDs in order. The SID list may indicate a forwarding path. With an SR technology, a node and a path through which a data packet carrying the SID list passes may be specified, to meet a traffic optimization requirement. To make an analogy, the data packet may be compared to luggage, and the SR may be compared to attaching a label to the luggage. If the luggage needs to be sent from a region A to a region D through a region B and a region C, a label indicating to "go to the region B first, then to the region C, and finally to the region D" may be attached to the luggage in the origin region A. In this way, the label on the luggage simply needs to be identified in each region, and the luggage may be forwarded from one region to another region based on the label of the luggage. In the SR technology, a head node adds a label to the data packet, and a transit node may forward the data packet to a next node based on the label until the data packet reaches a destination node. For example, <SID 1, SID 2, SID 3> is inserted into a packet header of a data packet, and the data packet packet is first forwarded to a node corresponding to the SID 1, then forwarded to a node corresponding to the SID 2, and then forwarded to a node corresponding to the SID 3. SR-MPLS is short for segment routing multi-protocol label switching (segment routing multi-protocol label switching).

### 2. Segment routing over internet protocol version 6 (Internet Protocol Version 6, IPv6) (SRv6)

Segment routing over internet protocol version 6 means to apply an SR technology to an IPv6 network. An IPv6 address (128 bits) is used as a representation of a SID. When forwarding a data packet, a network device supporting SRv6 queries a local segment identifier table (local sid table) based on a destination address (destination address, DA) in the data packet. When a longest match is found between the destination address of the data packet and any SID in the local segment identifier table, the network device performs, according to a policy related to the SID in the local segment identifier table, an operation corresponding to the policy. For example, the network device may forward the data packet through an outbound interface corresponding to the SID. If no longest match is found between the destination address of the data packet and any SID in the local segment identifier table, the network device queries an IPv6 forwarding table, and performs longest-match forwarding based on the IPv6 forwarding table.

In an SRv6 network, a value of a DA field in an IPv6 packet constantly changes. The value of the DA field is determined by both an SL and the segment list. When the pointer SL points to a currently to-be-processed segment, for example, a segment list [2], an IPv6 address of the segment list [2] needs to be copied to the DA field.

On a forwarding plane, if a node supports the SR, and a segment identifier of the node is in a destination address of the IPv6 packet, after receiving the packet, the node may decrease the SL by 1, offset the pointer to a new segment, copy a segment identifier (namely, an IPv6 address format) corresponding to the SL after the SL is decreased by 1 to the DA field, and then forward the packet to a next node. Usually, when the SL field decreases to 0, the node may pop an SRH, and then perform a next step of processing on the packet. If a node does not support the SR, the node does not need to process SRH information in the IPv6 packet. Instead, the node searches an IPv6 routing table based on an IPv6 destination address field, and performs normal IPv6 forwarding.

An SR policy (sr policy) is a traffic engineering mechanism for the SR. Usually, an SR policy includes a head node (headend), a color identifier (color), a destination identifier (endpoint), and a segment identifier list indicating a forwarding path. The headend identifies a head node that executes the SR policy. The color is used for associating the SR with a service attribute like a low delay and high bandwidth, to summarize a service capability of the SR policy. The endpoint identifies a destination address of the SR policy. Usually, one SR policy is determined by using (headend, color, endpoint). For a same headend, one policy may alternatively be determined by using (color, endpoint). The SR policy may include one or more segment identifier lists, to implement functions such as load balancing and multipath backup. When forwarding a packet, the head node may determine a segment identifier list corresponding to the packet according to the SR policy, to determine a forwarding path for forwarding the packet, and encapsulate the segment identifier list into the packet to display or dispersedly indicate a path.

A routing prefix includes an IP address and a subnet mask. In the IPv6 network, a length of the subnet mask may be 128 bits or less than 128 bits. In an example, the routing prefix may be written as A1::1/32 or A1::1/128, where A1::1 is an IP address, and 32 or 128 represents the length of the subnet mask.

A subnet prefix includes an IP address and a subnet mask, and represents a subnet. In the IPv6 network, a length of the subnet mask is less than 128 bits. In an example, the subnet prefix may be written as A1::1/32 or A1::1/64, where A1::1 is an IP address, and 32 or 64 represents the length of the subnet mask.

### 3. Packet format

A packet format in embodiments of this application includes but is not limited to an IP header, a segment routing header (segment routing header, SRH), optional type length value objects (Optional Type Length Value objects), and a packet payload (payload), where a type length value (Type Length Value, TLV) is an optional (optional) variable (variable) in the SRH, and the packet payload is used to carry packet data.

For ease of understanding, refer to FIG. 2. FIG. 2 is a diagram of a packet format according to an embodiment of this application. Specifically, a packet in this embodiment of this application includes an IP header, an SRH, an optional TLV object, and a packet payload. The IP header may be an IPv6 header. It may be understood that the IP header may alternatively be an IPv4 header.

To implement SRv6 based on an IPv6 forwarding plane, an IPv6 extension header is added, and is referred to as a segment routing header SRH. The SRH specifies an IPv6 explicit path and stores IPv6 segment list information, and a function of the segment list information is the same as that of a segment list in SR MPLS. A head node adds an SRH to an IPv6 packet, so that a transit node may forward the packet based on path information included in the SRH. Specifically, there are two pieces of key information in the SRH. One is a segment list (Segment List) in a form of an IPv6 address, which is similar to label stack information in a multi-protocol label switching (multi-protocol label switching, MPLS) network. The segment list including a plurality of sequentially arranged segment identifiers (Segment IDs, SIDs) indicates an explicit path in the SR. The other is segments left (Segments Left, SL), where the SL is a pointer and indicates a current segment identifier.

A segment list (segment list) field is used to carry information of a transit node that the packet needs to pass through or information of a destination node. It may be understood that a segment list [0] is usually the information of the destination node. It may be understood that the node may first read a value of the SL, and then read a corresponding segment list based on the value of the SL. For example, if the node reads that the value of the SL is 1, the node reads a segment list [1]. Through cooperation of the SL and the segment list in the packet, a next transit node to which the packet needs to reach can be updated during packet forwarding by changing the SL.

During actual application, the packet actually further includes some existing fields. For brief description, this is omitted in this embodiment of this application, and details are not described again. The packet may further include another field, to implement another function. This is not limited in embodiments of this application.

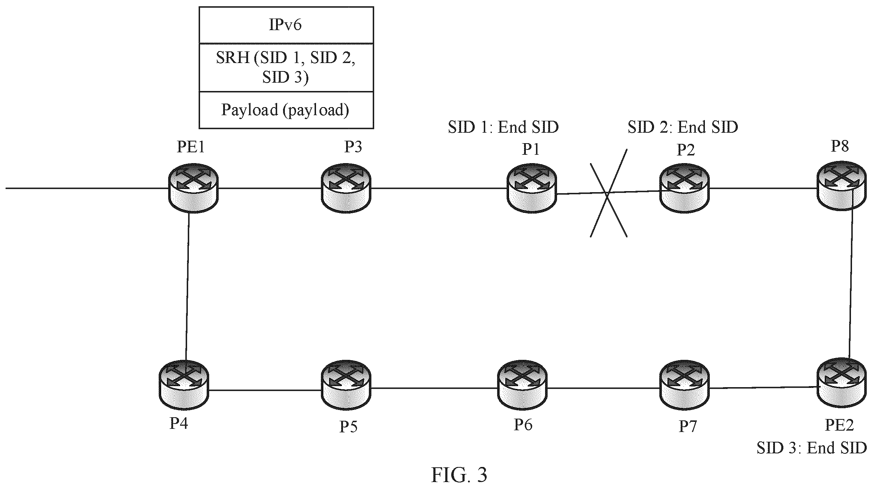

The following describes how to detect a path when there is a faulty path in a network in BFD or SBFD. FIG. 3 is a diagram of a communication scenario. An example in which a node PE1 is used as an initiator to send a control packet is used for description. For example, a segment list of the control packet indicates a path "(SID 1, SID 2, SID 3)", where the SID 1 corresponds to a node P1 (P1 for short below), the SID 2 corresponds to a node P2 (P2 for short below), and the SID 3 corresponds to a node PE2 (PE2 for short below). When a network is normal, that is, when a path between the node P1 and the node P2 is normal, after the control packet is sent from PE1, the control packet reaches PE2 through a shortest path under an indication of the segment list "(SID 1, SID 2, SID 3)". In other words, the control packet reaches PE2 through PE1, P3, P1, P2, P8, and PE2. Then, PE2 serves as a reflector and loops back the control packet to PE1. If PE1 receives the control packet from PE2, PE1 determines that the path indicated by the segment list "(SID 1, SID 2, SID 3)" is normal.

In some cases, a part of the shortest path (PE1-P3-P1-P2-P8-PE2) is faulty. For example, as shown in FIG. 3, a path between P1 and P2 is faulty. In this case, the control packet sent by PE1 reaches P1 under an indication of the segment list. Then, P1 sends the control packet to PE2 through another path based on an indication of the segment list of the control packet. Specifically, the control packet passes through PE1 -> P3 -> P1 -> P3 -> PE1 -> P4 -> P5 -> P6 -> P7 -> PE2 -> P8 -> P2 -> P8 -> PE2 and finally reaches PE2, and the path is also referred to as a bypass path. The foregoing bypass path also meets an indication of the segment list of the control packet. After PE2 receives the control packet, PE2 serves as a reflector and loops back the control packet to PE1. The loopback control packet reaches PE1 through a same bypass path (PE1 <- P3 <- P1 <- P3 <-PE1 <- P4 <- P5 <- P6 <- P7 <- PE2 <- P8 <- P2 <- P8 <- PE2). Because PE1 receives the control packet looped-back from PE2, PE1 determines that the path indicated by the segment list "(SID 1, SID 2, SID 3)" is normal. However, actually, there is a faulty path (P1 to P2) in the shortest path (PE1, P3, P1, P2, P8, PE2) indicated by the segment list "(SID 1, SID 2, SID 3)". Therefore, PE1 cannot detect the faulty path. Traffic is still forwarded through the bypass path, occupying extra bandwidth and reducing network throughput.

In view of this, an embodiment of this application provides a path fault detection method, including: A network device obtains a first packet, where the first packet includes a segment list, the segment list includes a plurality of sequentially arranged segment identifiers SIDs, the segment list identifies a forwarding path of the first packet, and the segment list includes a segment identifier of a first node and a segment identifier of a second node; the network device forwards the first packet based on the segment list; and the network device detects a status of a target path based on the first packet, where the target path is a shortest path between the first node and the second node, and a segment identifier that is in the segment list and that identifies the target path indicates a loose path. The network device may detect, based on the first packet, the shortest path indicated by the segment list. Therefore, the network device can find in time whether there is a faulty path in the shortest path between the first node and the second node. This prevents traffic from being forwarded through a bypass path, increases available bandwidth of the network device, and improves network data throughput.

The following describes this embodiment of this application. This embodiment of this application specifically provides two manners of detecting a status of a shortest path (referred to as a target path in this embodiment of this application) indicated by a segment list. The following manners are specifically included.
A. A network device forwards a first packet, and determines, based on whether the looped-back first packet is received, whether a path (namely, a target path) corresponding to a segment list of the first packet is faulty.
B. A network device determines, based on path status information, whether a target path is faulty.

It should be noted that the network device in this embodiment of this application may be a head node in an SR policy (or SRv6 policy) (a head node for short below), for example, the node PE1 in FIG. 3, or may be a transit node in an SR policy (or SRv6 policy) (a transit node for short below), for example, the node P1, the node P2, the node P3, or the node P8 in FIG. 3. This is not limited in embodiments of this application. The path in this embodiment of this application may also be referred to as a link. This is not limited in embodiments of this application.

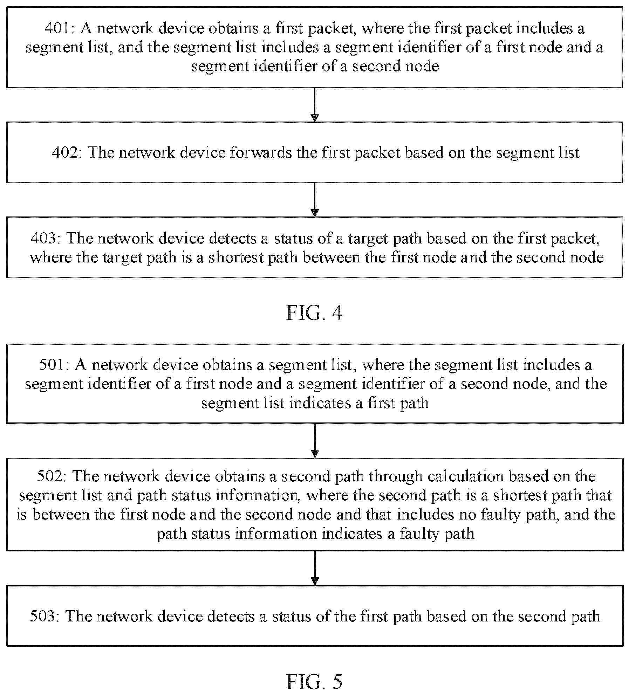

First, A in which a network device forwards a first packet, and determines, based on whether the looped-back first packet is received, whether a path (namely, a target path) corresponding to a segment list of the first packet is faulty is described. FIG. 4 is a diagram of an embodiment of a path fault detection method according to an embodiment of this application. The path fault detection method according to this embodiment of this application includes the following steps.

401: A network device obtains a first packet, where the first packet includes a segment list, and the segment list includes a segment identifier of a first node and a segment identifier of a second node.

In this embodiment, when the network device is a head node, that a network device obtains a first packet includes: The network device generates the first packet. When the network device is a transit node, that a network device obtains a first packet includes: The network device receives a second packet sent by a previous-hop node, and then processes the second packet to obtain the first packet.

The first packet is a packet used to detect a status of a path. For example, the first packet is a bidirectional forwarding detection BFD protocol packet, or the first packet is a seamless bidirectional forwarding detection SBFD protocol packet, for example, a detection packet (or a control packet) in BFD, or a detection packet (or a control packet) in SBFD. The first packet includes the segment list, the segment list includes a plurality of sequentially arranged segment identifiers SIDs, the segment list indicates a forwarding path of the first packet, and the segment list includes the segment identifier of the first node and the segment identifier of the second node. In other words, the segment list indicates a path between the first node and the second node. For example, a possible packet structure of the first packet is shown in FIG. 2.

In the segment list included in the first packet, a segment identifier identifying the target path indicates a loose path. In other words, the segment identifier that is in the segment list and that identifies the target path indicates that there may be a plurality of paths between the first node and the second node for forwarding a packet. The loose path means that the segment identifier in the segment list does not strictly indicate all nodes that a packet needs to pass through. For example, the segment identifiers included in the segment list are a SID 1 (a node P1), a SID 2 (a node P2), and a SID 3 (a node PE2). A packet carrying the segment list may reach the node PE2 through the nodes PE1, P3, P1, P2, and P8, or may reach the node PE2 through the nodes PE1, P3, P1, P2, P1, P3, PE1, P4, P5, P6, and P7. The segment identifiers (the SID 1, the SID 2, and the SID 3) included in the segment list indicate a loose path.

It may be understood that the segment list included in the first packet may further include a segment identifier of another node. For example, as shown in FIG. 3, the segment list included in the first packet specifically includes: the SID 1 (the node P1), the SID 2 (the node P2), and the SID 3 (the node PE2). The network device forwards the first packet based on the segment list (the SID 1, the SID 2, and the SID 3). Theoretically, the first packet needs to pass through the node P1, the node P2, and the node PE2.

Specifically, there are a plurality of implementation solutions for the first packet in this embodiment. The following separately describes the implementation solutions.

A1. A maximum forwarding hop count of the first packet is designed, and when a quantity of nodes that the first packet passes through reaches the maximum forwarding hop count of the first packet, the network device discards the first packet.

Specifically, the network device obtains a total hop count of the target path, that is, obtains a quantity of nodes that are passed through on the target path. Then, the network device designs, based on the total hop count of the target path, to discard the first packet after N hops of transmission, where N is a positive integer, and N is greater than or equal to the total hop count of the target path. When the first packet is transmitted on a bypass path, because of a limitation of being discarded after N hops of transmission, the first packet is discarded by a transit node (a transit node corresponding to an N^{th} hop) during transmission. The first packet cannot reach a destination (namely, the second node) of the first packet through the bypass path, and the second node cannot loop back the first packet to a sending end (namely, the head node) through the bypass path. According to the foregoing method, after the network device sends the first packet, if the network device does not receive the looped-back first packet, the network device determines that a status of the target path is faulty.

In a possible implementation, the first packet further includes a first identifier, the first identifier indicates to discard the first packet after N hops of transmission, and N is a positive integer; and a value of the first identifier is decreased by 1 each time the first packet is transmitted by one hop, and when the value of the first identifier is 0, the network device discards the first packet.

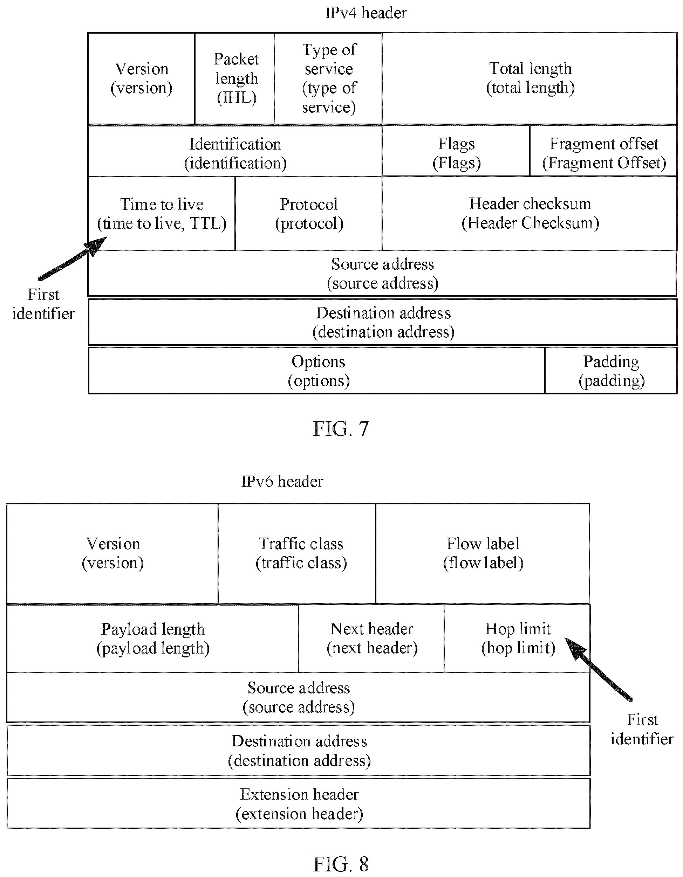

Optionally, the first identifier is carried in a time to live TTL field of an internet protocol version 4 IPv4 header of the first packet. For example, FIG. 7 is a diagram of a structure of an IPv4 header. The first identifier may be carried in a TTL field.

Optionally, the first identifier is carried in a hop limit Hop limit field of an internet protocol version 6 IPv6 header of the first packet. For example, FIG. 8 is a diagram of a structure of an IPv6 header. The first identifier may be carried in a hop limit field.

It should be noted that the first identifier may alternatively be located in another field of the first packet. This is not limited in embodiments of this application.

In a possible implementation, the network device obtains the total hop count of the target path, and then the network device determines the value N of the first identifier based on the total hop count of the target path, where N is greater than or equal to the total hop count of the target path.

Optionally, in this embodiment of this application, N may be greater than the total hop count of the target path. For example, the total hop count of the target path is 8, and N=10. According to the foregoing design, the first packet can be forwarded, on a path with a small bypass degree, to a destination node indicated by the segment list. The network device may tolerate the bypass path with the small bypass degree, to avoid frequent end-to-end path switching.

Specifically, the network device obtains a second packet, and the second packet may be considered as a first packet that is not filled with the value of the first identifier. Then, the network device determines the value N based on the total hop count of the target path. The network device fills the first identifier (that is, fills the value N in the first identifier) in the second packet, to generate the first packet.

Further, the network device may further perform committed access rate (committed access rate, CAR)-based control on the first packet that carries the first identifier, where the CAR-based control on the first packet indicates that a threshold of a transmission rate of the first packet per unit time is M, and M is a positive integer. Specifically, at an interface of the network device, packets are classified through CAR configuration, to control a data stream to be transmitted at a specific rate. To avoid a large amount of retransmission of the first packet that affects another service, the CAR-based control may be performed on the first packet to limit a transmission rate of the first packet.

A2. When forwarding the first packet, the network device determines, based on an outbound interface of the first packet and an inbound interface of the first packet, whether to discard the first packet.

Specifically, when forwarding the first packet, the network device detects the outbound interface and the inbound interface of the first packet. Then, the network device determines, based on whether the outbound interface of the first packet is consistent with the inbound interface of the first packet, whether to discard the first packet.

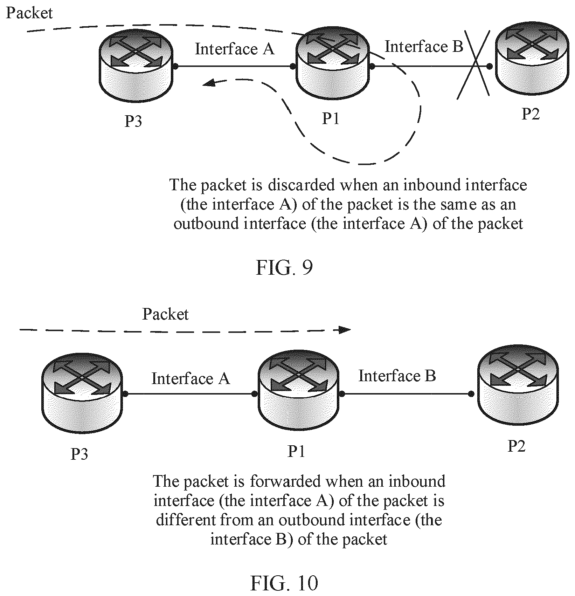

When the outbound interface of the first packet is consistent with the inbound interface of the first packet, the network device discards the first packet. For example, FIG. 9 is a diagram of an application scenario according to an embodiment of this application. For example, the network device is a node P1, and a path between the node P1 and a node P2 is faulty. After receiving a packet from a node P3, the node P1 detects whether an inbound interface of the packet is consistent with an outbound interface of the packet. Because the path between the node P1 and the node P2 is faulty, the node P1 needs to forward the packet from the node P3. Both the inbound interface and the outbound interface of the packet at the node P1 are an interface A. Therefore, the node P1 discards the packet.

When the outbound interface of the first packet is inconsistent with the inbound interface of the first packet, the network device forwards the first packet based on the segment list included in the first packet. For example, FIG. 10 is a diagram of an application scenario according to an embodiment of this application. For example, the network device is a node P1. After receiving a packet from a node P3, the node P1 detects whether an inbound interface of the packet is consistent with an outbound interface of the packet. Because a path between the node P1 and a node P2 is normal, the node P1 forwards the packet from the node P2 based on an indication of a segment list of the packet. The inbound interface of the packet at the node P1 is an interface A, and the outbound interface of the packet at the node P1 is an interface B. Therefore, the node P1 forwards the packet normally.

In a possible implementation, the first packet further includes a second identifier, and the second identifier indicates the network device to detect whether the inbound interface for receiving the first packet is consistent with the outbound interface for sending the first packet.

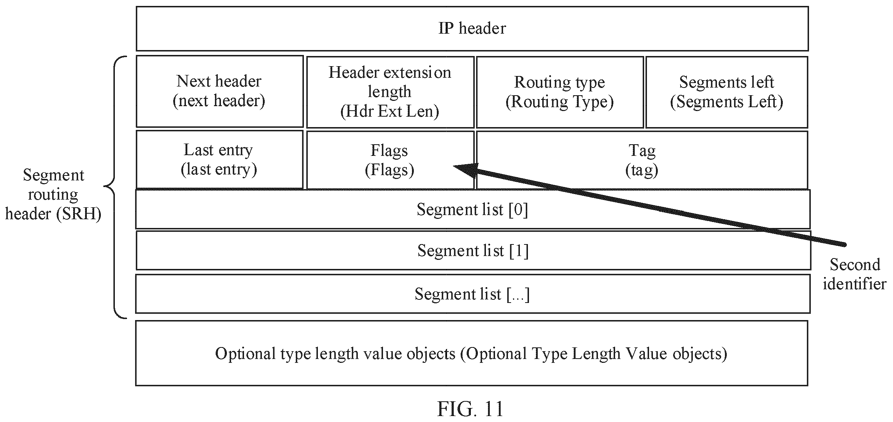

Optionally, the second identifier is carried in a flags Flags field of a segment routing header SRH of the first packet. For ease of understanding, refer to FIG. 11. FIG. 11 is a diagram of a structure of the first packet according to an embodiment of this application. For example, a specific bit (for example, a first bit) in the flags Flags field is used as the second identifier. When the specific bit in the flags Flags field is 1, the network device needs to detect whether the outbound interface of the first packet is consistent with the inbound interface of the first packet, and determine, based on a detection result, whether to discard the first packet. When the specific bit in the flags Flags field is 0, the network device forwards the first packet according to a normal procedure, that is, does not need to detect whether the outbound interface of the first packet is consistent with the inbound interface of the first packet.

It should be noted that the second identifier in this embodiment of this application may alternatively be located in another field of the first packet. This is not limited in embodiments of this application.

A3. The segment list of the first packet is deigned, so that the first packet is forwarded strictly according to the path indicated by the segment list.

Specifically, when the network device needs to detect a status of a path (for example, a path P1-P2-PE2 in FIG. 3), the network device first calculates, based on a shortest path tree (shortest path tree, SPT), a shortest path between a plurality of nodes that pass through the path. Then, the network device determines a segment identifier SID of each node that the shortest path traverses. The network device generates the segment list of the first packet, where the segment list includes a segment identifier of each node that the target path (namely, the shortest path) traverses. In other words, the network device determines a strict path (the strict path is a path on which each node that a packet passes through is strictly limited) based on the loose path (the loose path is a path on which each node that a packet passes through is not strictly limited). Then, the strict path (namely, forwarding information of each node that the target path traverses) is filled in the segment list of the first packet, and the segment list is used to guide forwarding of the first packet.

Optionally, the network device generates the target path based on a link state database (Link State Database, LSDB) and/or a segment routing database (Segment Routing Database, SRDB).

Optionally, the segment list of the first packet includes forwarding information of each node that the target path traverses. The forwarding information includes a segment identifier (SID) of a node and an outbound interface of the node, or the forwarding information includes an outbound interface of a node, or the forwarding information includes a segment identifier of a node.

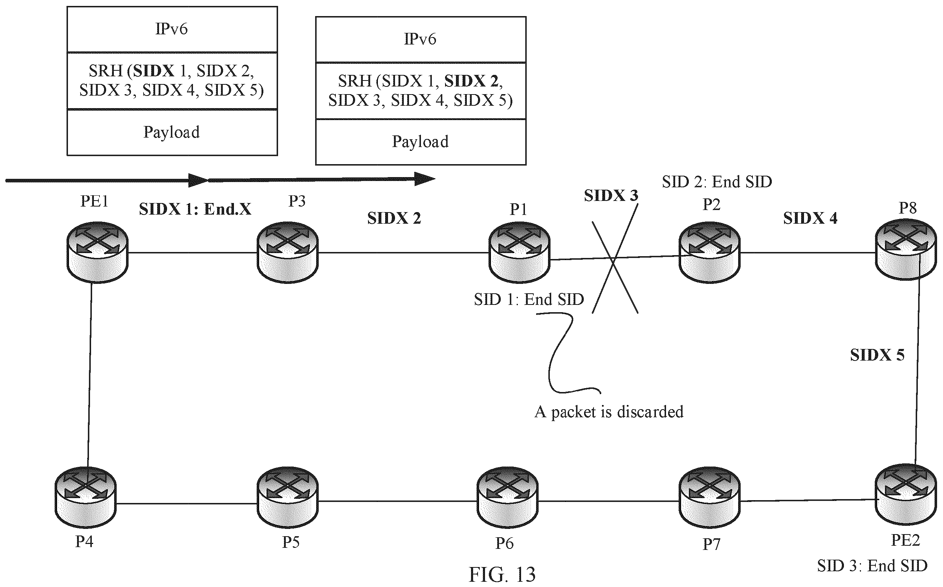

For example, FIG. 13 is a diagram of an application scenario according to an embodiment of this application. A node PE1 (serving as a network device) detects a status of a path P1 (SID 1)-P2 (SID 2)-PE2 (SID 3), and the node PE1 generates, based on the path P1 (SID 1)-P2 (SID 2)-PE2 (SID 3), a shortest path, namely, a target path, that traverses P1, P2, and PE2. The node PE1 determines forwarding information of each node on the target path, where the forwarding information may be an End.X SID (SIDX for short). The End.X SID indicates an outbound interface of a node. The network device determines an outbound interface for forwarding the packet based on the End.X SID. The node PE1 generates a segment list of a first packet, where the segment list specifically includes: a SIDX 1 (indicating an outbound interface of the node PE1), a SIDX 2 (indicating an outbound interface of the node P3), a SIDX 3 (indicating an outbound interface of a node P1), a SIDX 4 (indicating an outbound interface of the node P2), and a SIDX 5 (indicating an outbound interface of a node P8). The segment list indicates that the packet is forwarded to the node PE2 through a path PE1-P3-P1-P2-P8-PE2.

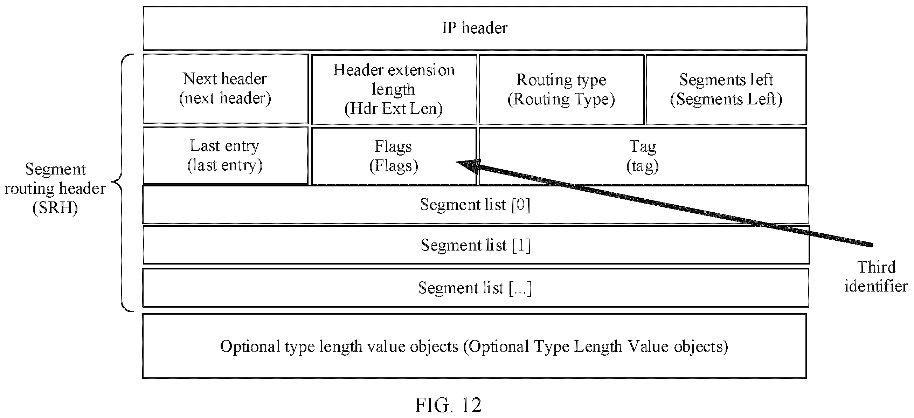

In a possible implementation, to further ensure that the first packet is forwarded based on the segment list (the segment list indicates a strict path), a third identifier is added to the first packet, where the third identifier indicates that fast reroute (fast reroute, FRR) is not performed for the first packet. For example, the third identifier is carried in the flags Flags field of the SRH of the first packet. For example, FIG. 12 is a diagram of a structure of the first packet according to an embodiment of this application. It should be noted that the third identifier may alternatively be located in another field of the first packet. This is not limited in embodiments of this application.

402: The network device forwards the first packet based on the segment list.

Different implementation solutions corresponding to the first packet are separately described below.

A1. The maximum forwarding hop count of the first packet is designed, and when the quantity of nodes that the first packet passes through reaches the maximum forwarding hop count of the first packet, the network device discards the first packet. Specifically, the network device determines, based on the first identifier included in the first packet, whether to continue to forward the first packet. When the value N of the first identifier is equal to 0, that is, the first identifier indicates to discard the first packet after 0 hops of transmission, the network device discards the first packet. When the value of the first identifier is greater than 0, the network device normally forwards the first packet based on the segment list.

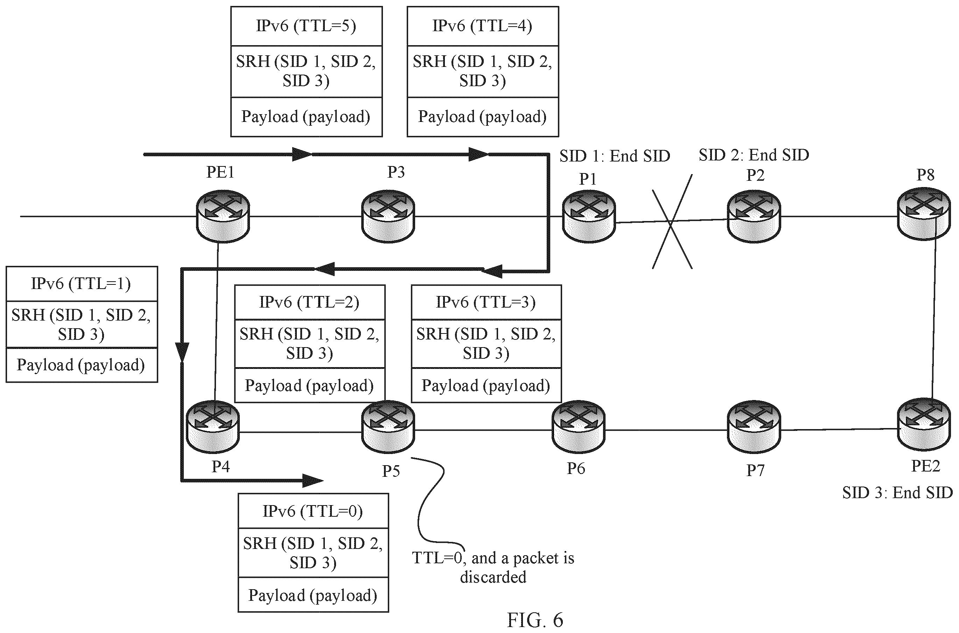

For example, FIG. 6 is a diagram of another communication scenario according to an embodiment of this application. An example in which a node PE1 sends a first packet is used for description. A segment list of the first packet includes a SID 1, a SID 2, and a SID 3, where the SID 1 corresponds to the node P1, the SID 2 corresponds to a node P2, and the SID 3 corresponds to a node PE2. The node PE1 forwards the first packet based on the segment list. A value of a first identifier (namely, TTL) in the first packet is 5, and the first identifier indicates to discard the first packet after 5 hops of nodes of transmission.

If the first packet starts from a node PE1 and reaches a node P3, the value of the first identifier is decreased by 1 (TTL=4). The first packet reaches the node P1. A path between the node P1 and the node P2 is faulty. Therefore, the node P1 forwards the first packet to the node P3, and the value of the first identifier is decreased by 1 (TTL=3). The rest can be deduced in the same manner. When the first packet is forwarded to a node P5, because TTL=0, the node P5 discards the first packet. The node PE2 cannot receive the first packet from the node PE1. Therefore, the node PE1 cannot receive the looped-back first packet (namely, the first packet looped-back from the node PE2). The node PE1 determines, by using the first packet, that a target path (namely, a shortest path corresponding to the segment list SID 1, SID 2, and SID 3) is a faulty path.

A2. Before actually forwarding the first packet, the network device detects whether the outbound interface of the first packet is consistent with the inbound interface of the first packet. When the outbound interface of the first packet is consistent with the inbound interface of the first packet, the network device discards the first packet. When the outbound interface of the first packet is inconsistent with the inbound interface of the first packet, the network device forwards the first packet based on the segment list of the first packet.

A3. The network device forwards the first packet based on the segment list of the first packet. When the network device determines that a next hop of the network device in the segment list is unreachable, the network device discards the first packet. When the network device determines that a next hop of the network device in the segment list is reachable, the network device forwards the first packet based on the segment list.

403: The network device detects the status of the target path based on the first packet, where the target path is a shortest path between the first node and the second node.

In this embodiment, the network device detects the status of the target path based on the first packet, where the target path is the shortest path between the first node and the second node. For example, a shortest path indicated by the segment list "(SID 1, SID 2, SID 3)" in FIG. 3 is "PE1-P3-P1-P2-P8-PE2". When the segment list carried in the first packet is "(SID 1, SID 2, SID 3)", the target path is "PE1-P3-P1-P2-P8-PE2".

In a possible implementation, the network device is a head node. After forwarding the first packet based on the segment list of the first packet, if the network device does not receive the looped-back first packet, the network device determines that the status of the target path is faulty. After forwarding the first packet based on the segment list of the first packet, if the network device receives the looped-back first packet, the network device determines that the status of the target path is normal.

In another possible implementation, the network device is a transit node. Before forwarding a packet, the network device determines whether the forwarded packet is the first packet, that is, the network device determines whether the forwarded packet is used to detect the status of the target path. If the forwarded packet is the first packet, and the network device discards the first packet, the network device notifies a head node that the status of the target path is abnormal.

In this embodiment of this application, the network device may detect, based on the first packet, the shortest path indicated by the segment list. Therefore, the network device can find in time whether there is a faulty path in the shortest path between the first node and the second node. This prevents traffic from being forwarded through a bypass path, increases available bandwidth of the network device, and improves network data throughput.

Second, B in which a network device determines, based on path status information, whether a target path is faulty is described. FIG. 5 is a diagram of an embodiment of a path fault detection method according to an embodiment of this application. A path fault detection method according to an embodiment of this application includes the following steps.

501: A network device obtains a segment list, where the segment list includes a segment identifier of a first node and a segment identifier of a second node, and the segment list indicates a target path.

In this embodiment, the network device determines the target path based on the segment list. Specifically, the network device determines the first node and the second node (or more other nodes) based on the segment list. Then, the network device calculates a shortest path between the first node and the second node, namely, the target path, based on a shortest path tree (shortest path tree, SPT).

502: The network device obtains a second path through calculation based on the segment list and path status information, where the second path is a shortest path between the first node and the second node that includes no faulty path, and the path status information indicates a faulty path.

In this embodiment, the network device obtains the path status information from a link state database (Link State Database, LSDB) and/or a segment routing database (Segment Routing Database, SRDB). The path status information indicates a status of each path in a current network, that is, the path status information indicates the faulty path. Then, the network device calculates, based on the segment list and the path status information, an actually reachable path between the first node and the second node, where the path is also referred to as the second path. The second path is a shortest path that is between the first node and the second node and that does not include the faulty path.

503: The network device detects a status of the target path based on the second path.

In this embodiment, specifically, when the second path traverses repeated nodes, the network device determines that the status of the target path is faulty. When the target path does not traverse repeated nodes, the network device determines that the status of the target path is normal.

In a possible implementation, a head node performs steps 501 to 503. In another possible implementation, to avoid excessive calculation workload of a head node (for example, the node PE1 in FIG. 3), any one or more transit nodes on the target path may alternatively be used as a root to perform path calculation, that is, a transit node performs steps 501 to 503.

In this embodiment of this application, the network device obtains the path status information from the link state database LSDB and/or the segment routing database SRDB, and the network device detects, based on the path status information, the status of the shortest path indicated by the segment list. Therefore, the network device can find in time whether there is a faulty path in the shortest path between the first node and the second node. This prevents traffic from being forwarded through a bypass path, increases available bandwidth of the network device, and improves network data throughput.

The foregoing mainly describes the solutions provided in embodiments of this application from a perspective of methods. It may be understood that, to implement the foregoing functions, the network device includes a corresponding hardware structure and/or software module for implementing each function. A person of ordinary skill in the art should easily be aware that, in combination with example modules, algorithms, and steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function modules of the network device may be obtained through division according to the foregoing method examples. For example, the function modules may be obtained through division corresponding to various functions, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

The following describes a communication apparatus in embodiments of this application. The communication apparatus described below has any function of the network device in the foregoing method embodiments.

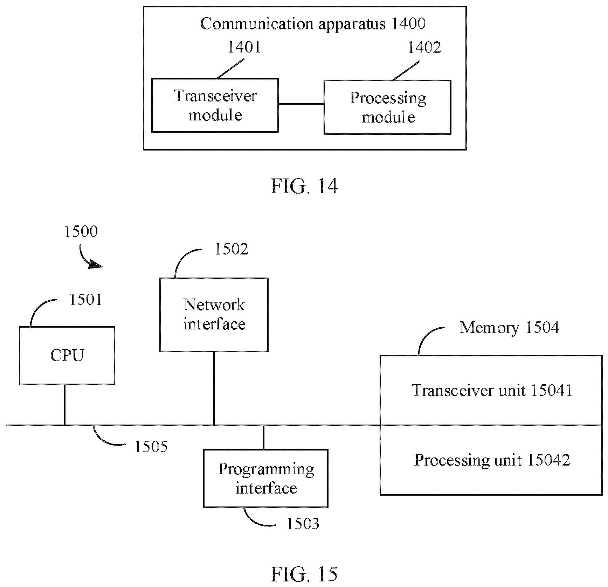

FIG. 14 is a diagram of a structure of a communication apparatus 1400 according to an embodiment of this application. As shown in FIG. 14, in a possible implementation, the communication apparatus 1400 includes: a transceiver module 1401, configured to perform steps 401 and 402; and a processing module 1402, configured to perform step 403. In another possible implementation, the transceiver module 1401 is configured to perform steps 502 and 503; and the processing module 1402 is configured to perform step 501.

In an example, the transceiver module 1401 is configured to obtain a first packet by a network device.

The first packet includes a segment list, the segment list includes a plurality of sequentially arranged segment identifiers SIDs, the segment list identifies a forwarding path of the first packet, and the segment list includes a segment identifier of a first node and a segment identifier of a second node.

The transceiver module 1401 is further configured to forward the first packet based on the segment list.

The processing module 1402 is configured to detect a status of a target path based on the first packet, where the target path is a shortest path between the first node and the second node, and a segment identifier that is in the segment list and that identifies the target path indicates a loose path.

In a possible implementation, the first packet further includes a first identifier, the first identifier indicates to discard the first packet after N hops of transmission, and N is a positive integer.

A value of the first identifier is decreased by 1 each time the first packet is transmitted by one hop, and when the value of the first identifier is 0, the network device discards the first packet.

In a possible implementation, the transceiver module 1401 is further configured to obtain a total hop count of the target path.

The processing module 1402 is further configured to determine the value N of the first identifier based on the total hop count of the target path, where N is greater than or equal to the total hop count of the target path.

In a possible implementation, the transceiver module 1401 is further configured to obtain a second packet, where the second packet includes the segment list.

The processing module 1402 is further configured to fill the first identifier in the second packet, to generate the first packet.

In a possible implementation, the processing module 1402 is further configured to perform committed access rate CAR-based control on the first packet, where a CAR-based control indicates that a threshold of a transmission rate of the first packet per unit time is M, and M is a positive integer.

In a possible implementation, the first identifier is carried in a time to live TTL field of an internet protocol version 4 IPv4 header of the first packet, or the first identifier is carried in a hop limit Hop limit field of an internet protocol version 6 IPv6 header of the first packet.

In a possible implementation, the first packet further includes a second identifier, and the second identifier indicates the network device to detect whether an inbound interface for receiving the first packet is consistent with an outbound interface for sending the first packet.

In a possible implementation, the processing module 1402 is further configured to detect, based on the second identifier, whether the inbound interface for receiving the first packet is consistent with the outbound interface for receiving the first packet.

The transceiver module 1401 is further configured to discard, by the network device, the first packet when the network device detects that the inbound interface for receiving the first packet is consistent with the outbound interface for sending the first packet.

The transceiver module 1401 is further configured to forward, by the network device, the first packet based on the segment list when the network device detects that the inbound interface for receiving the first packet is inconsistent with the outbound interface for sending the first packet.

In a possible implementation, the second identifier is carried in a flags Flags field of a segment routing header SRH of the first packet.

In a possible implementation, the processing module 1402 is further configured to: when the network device receives the first packet from the second node, determine, by the network device, that the status of the target path is normal.

The processing module 1402 is further configured to: when the network device does not receive the first packet from the second node, determine, by the network device, that the status of the target path is faulty.

In a possible implementation, the first packet is a bidirectional forwarding detection BFD protocol packet, or the first packet is a seamless bidirectional forwarding detection SBFD protocol packet.

In another example, the transceiver module 1401 is configured to obtain a segment list, where the segment list includes a segment identifier of a first node and a segment identifier of a second node, the segment list indicates a target path, and the target path is a shortest path between the first node and the second node.

The processing module 1402 is configured to obtain a second path through calculation based on the segment list and path status information, where the second path is a shortest path that is between the first node and the second node and that includes no faulty path, and the path status information indicates a faulty path.

The processing module 1402 is further configured to detect a status of the target path based on the second path.

In a possible implementation, the processing module 1402 is further configured to: when the second path traverses repeated nodes, determine that the status of the target path is faulty.

The processing module 1402 is further configured to: when the target path does not traverse repeated nodes, determine that the status of the target path is normal.

In a possible implementation, the transceiver module 1401 is further configured to obtain the path status information from a link state database (Link State Database, LSDB) and/or a segment routing database (Segment Routing Database, SRDB).

In still another example, the transceiver module 1401 is configured to obtain a first packet, where the first packet includes a segment list, and the segment list includes a plurality of sequentially arranged segment identifiers SIDs.

The segment list includes forwarding information of each node that a target path traverses, and the target path is a shortest path between the first node and the second node.

The transceiver module 1401 is further configured to forward the first packet based on the segment list.

The processing module 1402 is configured to detect a status of the target path based on the first packet.

In a possible implementation, the transceiver module 1401 is further configured to obtain a third packet, where a segment list of the third packet includes a plurality of sequentially arranged segment identifiers, and the segment list of the third packet indicates a plurality of forwarding paths of the third packet.

The transceiver module 1401 is further configured to forward the third packet based on the segment list of the third packet.

In a possible implementation, the forwarding information includes a segment identifier of the node and/or an adjacency segment identifier of the node.

In a possible implementation, the processing module 1402 is further configured to discard the first packet when the network device determines that a next hop of the network device in the segment list is unreachable.

The processing module 1402 is further configured to forward the first packet based on the segment list when the network device determines that a next hop of the network device in the segment list is reachable.

In a possible implementation, the first packet further includes a third identifier, and the third identifier indicates that fast reroute FRR is not performed in a forwarding process of the first packet.

In a possible implementation, the third identifier is carried in a flags Flags field of a segment routing header SRH of the first packet.

The communication apparatus 1400 may correspond to the network device in the foregoing method embodiments. The units in the communication apparatus 1400 and the foregoing other operations and/or functions are respectively used to implement the steps and methods implemented by the network device in the method embodiments. For specific details, refer to the foregoing method embodiments. For brevity, details are not described herein again.

When the communication apparatus 1400 performs the foregoing method embodiments, division into the foregoing function modules is merely used as an example for description. During actual application, the foregoing functions may be allocated to different function modules for implementation according to a requirement. In other words, an internal structure of the communication apparatus 1400 is divided into different function modules, to implement all or some of the functions described above. In addition, the communication apparatus 1400 provided in the foregoing embodiment and the method in the embodiment corresponding to FIG.4 or FIG. 5 belong to a same concept. For a specific implementation process of the communication apparatus 1400, refer to the foregoing method embodiment. Details are not described herein again.

To implement the foregoing embodiments, this application further provides a communication apparatus. FIG. 15 is a diagram of a structure of a communication apparatus 1500 according to an embodiment of this application.

Although the communication apparatus 1500 shown in FIG. 15 shows some specific features, from embodiments of this application, a person skilled in the art may be aware that for brevity, FIG. 15 does not show various other features, to avoid confusing more related aspects of implementations disclosed in embodiments of this application. Therefore, for example, in some implementations, the communication apparatus 1500 includes one or more processing units (for example, CPUs) 1501, a network interface 1502, a programming interface 1503, a memory 1504, and one or more communication buses 1505 configured to interconnect various components. In some other implementations, some function components or units may be omitted or added to the communication apparatus 1500 based on the foregoing example.

In some implementations, the network interface 1502 is configured to connect to one or more other communication apparatuses/servers in a network system. In some implementations, the communication bus 1505 includes a circuit that interconnects and controls communication between system components. The memory 1504 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1504 may include a volatile memory. The volatile memory may be a random access memory (random access memory, RAM), and is used as an external cache.

In some implementations, the memory 1504 or a non-transitory computer-readable storage medium of the memory 1504 stores the following program, module, and data structure, or a subset thereof, for example, includes a transceiver unit 15041 and a processing unit 15042.

In a possible embodiment, the communication apparatus 1500 may have any function of the network device in the method embodiment corresponding to FIG. 4 or FIG. 5.

In an example, the network interface 1502 is configured to obtain a first packet by a network device.

The first packet includes a segment list, the segment list includes a plurality of sequentially arranged segment identifiers SIDs, the segment list identifies a forwarding path of the first packet, and the segment list includes a segment identifier of a first node and a segment identifier of a second node.

The network interface 1502 is further configured to forward the first packet based on the segment list.

The CPU 1501 is configured to detect a status of a target path based on the first packet, where the target path is a shortest path between the first node and the second node, and a segment identifier that is in the segment list and that identifies the target path indicates a loose path.

In a possible implementation, the first packet further includes a first identifier, the first identifier indicates to discard the first packet after N hops of transmission, and N is a positive integer; and a value of the first identifier is decreased by 1 each time the first packet is transmitted by one hop, and when the value of the first identifier is 0, the network device discards the first packet.

In a possible implementation, the network interface 1502 is further configured to obtain a total hop count of the target path.

The CPU 1501 is further configured to determine the value N of the first identifier based on the total hop count of the target path, where N is greater than or equal to the total hop count of the target path.

In a possible implementation, the network interface 1502 is further configured to obtain a second packet, where the second packet includes the segment list.

The CPU 1501 is further configured to fill the first identifier in the second packet, to generate the first packet.

In a possible implementation, the CPU 1501 is further configured to perform committed access rate CAR-based control on the first packet, where a CAR-based control indicates that a threshold of a transmission rate of the first packet per unit time is M, and M is a positive integer.

In a possible implementation, the first identifier is carried in a time to live TTL field of an internet protocol version 4 IPv4 header of the first packet.

Alternatively, the first identifier is carried in a hop limit Hop limit field of an internet protocol version 6 IPv6 header of the first packet.

In a possible implementation, the first packet further includes a second identifier, and the second identifier indicates the network device to detect whether an inbound interface for receiving the first packet is consistent with an outbound interface for sending the first packet.

In a possible implementation, the CPU 1501 is further configured to detect, based on the second identifier, whether an inbound interface for receiving the first packet is consistent with an outbound interface for receiving the first packet.

The network interface 1502 is further configured to discard, by the network device, the first packet when the network device detects that the inbound interface for receiving the first packet is consistent with the outbound interface for sending the first packet.

The network interface 1502 is further configured to forward, by the network device, the first packet based on the segment list when the network device detects that the inbound interface for receiving the first packet is inconsistent with the outbound interface for sending the first packet.

In a possible implementation, the second identifier is carried in a flags Flags field of a segment routing header SRH of the first packet.

In a possible implementation, the CPU 1501 is further configured to: when the network device receives the first packet from the second node, determine, by the network device, that the status of the target path is normal.

The CPU 1501 is further configured to: when the network device does not receive the first packet from the second node, determine, by the network device, that the status of the target path is faulty.

In a possible implementation, the first packet is a bidirectional forwarding detection BFD protocol packet, or the first packet is a seamless bidirectional forwarding detection SBFD protocol packet.

In another example, the network interface 1502 is configured to obtain a segment list, where the segment list includes a segment identifier of a first node and a segment identifier of a second node, the segment list indicates a target path, and the target path is a shortest path between the first node and the second node.

The CPU 1501 is configured to obtain a second path through calculation based on the segment list and path status information, where the second path is a shortest path that is between the first node and the second node and that includes no faulty path, and the path status information indicates a faulty path.

The CPU 1501 is further configured to detect a status of the target path based on the second path.

In a possible implementation, the CPU 1501 is further configured to: when the second path traverses repeated nodes, determine that the status of the target path is faulty.

The CPU 1501 is further configured to: when the target path does not traverse repeated nodes, determine that the status of the target path is normal.

In a possible implementation, the network interface 1502 is further configured to obtain the path status information from a link state database (Link State Database, LSDB) and/or a segment routing database (Segment Routing Database, SRDB).

In still another example, the network interface 1502 is configured to obtain a first packet, where the first packet includes a segment list, and the segment list includes a plurality of sequentially arranged segment identifiers SIDs.

The segment list includes forwarding information of each node that a target path traverses, and the target path is a shortest path between the first node and the second node.

The network interface 1502 is further configured to forward the first packet based on the segment list.

The CPU 1501 is configured to detect a status of the target path based on the first packet.

In a possible implementation,
the network interface 1502 is further configured to obtain a third packet, where a segment list of the third packet includes a plurality of sequentially arranged segment identifiers, and the segment list of the third packet indicates a plurality of forwarding paths of the third packet.

The network interface 1502 is further configured to forward the third packet based on the segment list of the third packet.

In a possible implementation, the forwarding information includes a segment identifier of the node and/or an adjacency segment identifier of the node.

In a possible implementation,
the CPU 1501 is further configured to discard the first packet when the network device determines that a next hop of the network device in the segment list is unreachable.

The CPU 1501 is further configured to forward the first packet based on the segment list when the network device determines that a next hop of the network device in the segment list is reachable.

In a possible implementation, the first packet further includes a third identifier, and the third identifier indicates that fast reroute FRR is not performed in a forwarding process of the first packet.

In a possible implementation, the third identifier is carried in a flags Flags field of a segment routing header SRH of the first packet.

It should be understood that the communication apparatus 1500 corresponds to the network device in the foregoing method embodiments, and the modules in the communication apparatus 1500 and the foregoing other operations and/or functions are respectively used to implement the steps and methods implemented by the network device in the foregoing method embodiments. For specific details, refer to the method embodiment corresponding to FIG. 4 or FIG. 5. For brevity, details are not described herein again.

It should be understood that in this application, the network interface 1502 on the communication apparatus 1500 may complete a data receiving and sending operation, or a processor may invoke program code in a memory, and implement a function of the transceiver unit in cooperation with the network interface 1502 when required.

In various implementations, the communication apparatus 1500 is configured to perform the path fault detection method provided in embodiments of this application, for example, perform the path fault detection method corresponding to the embodiment shown in FIG. 4 or FIG. 5.

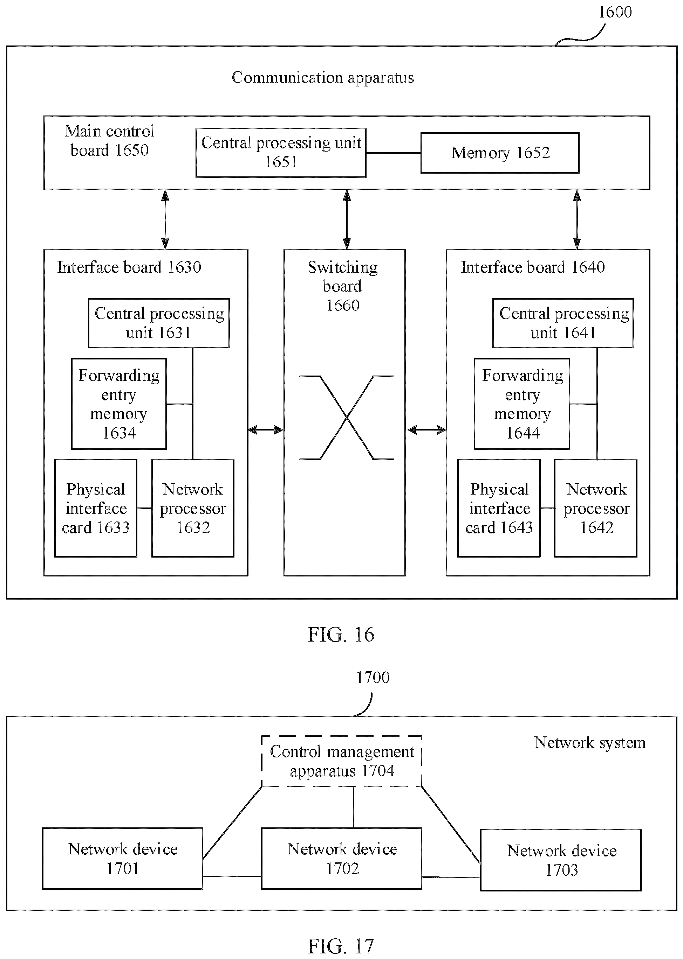

A specific structure of the communication apparatus in FIG. 15 in this application may be shown in FIG. 16.

FIG. 16 is a diagram of a structure of a communication apparatus 1600 according to an embodiment of this application. The communication apparatus 1600 includes a main control board 1650 and an interface board 1630.

The main control board 1650 is also referred to as a main processing unit (main processing unit, MPU) or a route processor (route processor). The main control board 1650 is configured to control and manage components in the communication apparatus 1600, including route calculation, device management, device maintenance, and protocol processing functions. The main control board 1650 includes a central processing unit 1651 and a memory 1652.

The interface board 1630 is also referred to as a line processing unit (line processing unit, LPU), a line card (line card), or a service board. The interface board 1630 is configured to provide various service interfaces and forward a data packet. The service interfaces include but are not limited to ethernet interfaces and POS (Packet over SONET/SDH, POS) interfaces. The interface board 1630 includes a central processing unit 1631, a network processor 1632, a forwarding entry memory 1634, and a physical interface card (physical interface card, PIC) 1633.

The central processing unit 1631 on the interface board 1630 is configured to: control and manage the interface board 1630 and communicate with the central processing unit 1651 on the main control board 1650.

The network processor 1632 is configured to implement packet forwarding processing. A form of the network processor 1632 may be a forwarding chip.

The physical interface card 1633 is configured to implement an interconnection function at a physical layer. Original traffic enters the interface board 1630 from the physical interface card 1633, and a processed packet is sent from the physical interface card 1633. The physical interface card 1633 includes at least one physical interface. The physical interface is also referred to as a physical port, and the physical interface may be a flexible ethernet (Flexible Ethernet, FlexE) physical interface. The physical interface card 1633, also referred to as a subcard, may be mounted on the interface board 1630, and is responsible for converting an optical/electrical signal into a packet, performing validity check on the packet, and forwarding the packet to the network processor 1632 for processing. In some embodiments, the central processing unit 1631 of the interface board 1630 may further perform a function of the network processor 1632, for example, implement software forwarding based on a general-purpose CPU, so that the interface board 1630 does not need the network processor 1632.

Optionally, the communication apparatus 1600 includes a plurality of interface boards. For example, the communication apparatus 1600 further includes an interface board 1640. The interface board 1640 includes a central processing unit 1641, a network processor 1642, a forwarding entry memory 1644, and a physical interface card 1643.

Optionally, the communication apparatus 1600 further includes a switching board 1660. The switching board 1660 may also be referred to as a switch fabric unit (switch fabric unit, SFU). When the communication apparatus has a plurality of interface boards 1630, the switching board 1660 is configured to complete data exchange between the interface boards. For example, the interface board 1630 and the interface board 1640 may communicate with each other through the switching board 1660.

The main control board 1650 is coupled with the interface board. For example, the main control board 1650, the interface board 1630, the interface board 1640, and the switching board 1660 are connected to each other through a system bus and/or a system backplane to implement interworking. In a possible implementation, an inter-process communication (inter-process communication, IPC) protocol channel is established between the main control board 1650 and the interface board 1630, and the main control board 1650 and the interface board 1630 communicate with each other through the IPC channel.

Logically, the communication apparatus 1600 includes a control plane and a forwarding plane. The control plane includes the main control board 1650 and the central processing unit 1631. The forwarding plane includes components used for forwarding, for example, the forwarding entry memory 1634, the physical interface card 1633, and the network processor 1632. The control plane performs functions such as route advertising, generating a forwarding table, processing signaling and protocol packets, and configuring and maintaining a status of a device. The control plane delivers the generated forwarding table to the forwarding plane. On the forwarding plane, the network processor 1632 looks up the table and forwards a packet received by the physical interface card 1633 based on the forwarding table delivered by the control plane. The forwarding table delivered by the control plane may be stored in the forwarding entry memory 1634. In some embodiments, the control plane and the forwarding plane may be completely separated, and are not on a same device.

It should be understood that the transceiver unit in the communication apparatus 1500 may be equivalent to the physical interface card 1633 or the physical interface card 1643 in the communication apparatus 1600, and the transceiver unit and the processing unit 15042 in the communication apparatus 1500 may be equivalent to the central processing unit 1651 or the central processing unit 1631 in the communication apparatus 1600, or may be equivalent to program code or instructions stored in the memory 1652.

It should be understood that, in this embodiment of this application, operations on the interface board 1640 are the same as operations on the interface board 1630. For brevity, details are not described again. It should be understood that the communication apparatus 1600 in this embodiment may correspond to the network device in the foregoing method embodiments. The main control board 1650, the interface board 1630, and/or the interface board 1640 in the communication apparatus 1600 may implement functions and/or various steps performed by the network device in the foregoing method embodiments. For brevity, details are not described herein again.

It should be noted that there may be one or more main control boards, and when there are a plurality of main control boards, a primary main control board and a secondary main control board may be included. There may be one or more interface boards, and the communication apparatus with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need a switching board, and the interface board provides a function of processing service data of an entire system. In a distributed forwarding architecture, the communication apparatus may include at least one switching board, and exchange data between a plurality of interface boards through the switching board, to provide a large-capacity data exchange and processing capability. Optionally, a form of the communication apparatus may alternatively be only one board, to be specific, there is no switching board, and functions of the interface board and the main control board are integrated on the board. In this case, a central processing unit on the interface board and a central processing unit on the main control board may be combined into one central processing unit on the board, to implement functions obtained after the two are superimposed. Which architecture is specifically used depends on a specific networking deployment scenario, and is not uniquely limited herein.

In some possible embodiments, the network device may be implemented as a virtualized device. The virtualized device may be a virtual machine (virtual machine, VM), a virtual router, or a virtual switch that runs a program for sending a packet. The virtualized device is deployed on a hardware device (for example, a physical server). For example, the network device may be implemented based on a general-purpose physical server and a network functions virtualization (network functions virtualization, NFV) technology.

It should be understood that the communication apparatuses in the foregoing product forms separately have any function of the network device in the foregoing method embodiments. Details are not described herein again.

An embodiment of this application further provides a computer-readable storage medium, including instructions. When the instructions are run on a computer, the computer controls a network apparatus to perform any implementation shown in the foregoing method embodiments.

An embodiment of this application further provides a computer program product. The computer program product includes computer program code. When the computer program code is run on a computer, the computer is enabled to perform any implementation described in the foregoing method embodiments.

Further, an embodiment of this application further provides a computer program product. When the computer program product runs on a communication apparatus, the communication apparatus is enabled to perform the method performed by the network device in the method embodiment corresponding to FIG. 4 or FIG. 5.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

FIG. 17 is a diagram of a network system 1700 according to an embodiment of this application. The network system 1700 includes a network device 1701, a network device 1702, and a network device 1703. The network device 1701, the network device 1702, and the network device 1703 may be, for example, physical devices such as routers, switches, or gateways, or may be virtual devices that support route advertising and packet forwarding. Specific types of the network device 1701, the network device 1702, and the network device 1703 are not limited in this embodiment.

In a possible example, the network device 1701 obtains a first packet, where a segment list of the first packet indicates that a forwarding path of the first packet includes the network device 1701 and the network device 1703, that is, the segment list of the first packet includes a segment identifier of the network device 1701 and a segment identifier of the network device 1703.

The network device 1701 forwards the first packet based on the segment list of the first packet.

The network device 1701 detects a status of a target path based on the first packet, where the target path is a shortest path between the network device 1701 and the network device 1703. Specifically, when the network device 1701 receives the first packet looped-back by the network device 1703, the network device 1701 determines that the status of the target path is normal; or when the network device 1701 does not receive the first packet looped-back by the network device 1703, the network device 1701 determines that the status of the target path is faulty.

For example, after receiving the first packet, the network device 1702 determines that a value of the first identifier in the first packet is 0, and the network device 1702 discards the first packet.

For another example, after receiving the first packet, the network device 1702 detects, based on an indication of a second identifier in the first packet, whether an inbound interface for receiving the first packet is consistent with an outbound interface for sending the first packet in the network device 1702. If the inbound interface is inconsistent with the outbound interface, the first packet is forwarded; or if the inbound interface is consistent with the outbound interface, the first packet is discarded.

For another example, the segment list of the first packet includes a segment identifier of the network device 1701, a segment identifier of the network device 1702, and a segment identifier of the network device 1703. When the network device 1702 determines that a next hop (namely, the network device 1703) is unreachable, for example, a path between the network device 1702 and the network device 1703 is faulty, the network device 1702 discards the first packet.

For another example, after obtaining the segment list, the network device 1701 detects a status of a target path. The network device 1702 may alternatively be used as a root to perform path calculation, and detect a status of a target path.

Optionally, the network system 1700 further includes a control management apparatus 1704. The control management apparatus 1704 may be a server that manages the network device 1701, the network device 1702, and the network device 1703. Optionally, the network device 1701 may be the communication apparatus 1400, the communication apparatus 1500, or the communication apparatus 1600. Optionally, the network device 1702 may be the communication apparatus 1400, the communication apparatus 1500, or the communication apparatus 1600. Optionally, the network device 1703 may be the communication apparatus 1400, the communication apparatus 1500, or the communication apparatus 1600.

The communication apparatuses in the foregoing product forms separately have any function of the network device in the foregoing method embodiments. Details are not described herein again.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

## Claims

1. A path fault detection method, comprising:
obtaining, by a network device, a first packet, wherein
the first packet comprises a segment list, the segment list comprises a plurality of sequentially arranged segment identifiers SIDs, the segment list identifies a forwarding path of the first packet, and the segment list comprises a segment identifier of a first node and a segment identifier of a second node;
forwarding, by the network device, the first packet based on the segment list; and
detecting, by the network device, a status of a target path based on the first packet, wherein the target path is a shortest path between the first node and the second node, and a segment identifier that is in the segment list and that identifies the target path indicates a loose path.

2. The method according to claim 1, wherein
the first packet further comprises a first identifier, the first identifier indicates to discard the first packet after N hops of transmission, and N is a positive integer; and
a value of the first identifier is decreased by 1 each time the first packet is transmitted by one hop, and when the value of the first identifier is 0, the network device discards the first packet.

3. The method according to claim 2, wherein the method further comprises:
obtaining, by the network device, a total hop count of the target path; and
determining, by the network device, the value N of the first identifier based on the total hop count of the target path, wherein N is greater than or equal to the total hop count of the target path.

4. The method according to claim 2 or 3, wherein the obtaining, by a network device, a first packet comprises:
obtaining, by the network device, a second packet, wherein the second packet comprises the segment list; and
filling, by the network device, the first identifier in the second packet, to generate the first packet.

5. The method according to any one of claims 2 to 4, wherein the method further comprises:
performing, by the network device, committed access rate CAR-based control on the first packet, wherein a CAR-based control indicates that a threshold of a transmission rate of the first packet per unit time is M, and M is a positive integer.

6. The method according to any one of claims 2 to 5, wherein
the first identifier is carried in a time to live TTL field of an internet protocol version 4 IPv4 header of the first packet; or
the first identifier is carried in a hop limit Hop limit field of an internet protocol version 6 IPv6 header of the first packet.

7. The method according to claim 1, wherein
the first packet further comprises a second identifier, and the second identifier indicates the network device to detect whether an inbound interface for receiving the first packet is consistent with an outbound interface for sending the first packet.

8. The method according to claim 7, wherein the forwarding, by the network device, the first packet based on the segment list comprises:
detecting, by the network device based on the second identifier, whether the inbound interface for receiving the first packet is consistent with the outbound interface for sending the first packet; and
discarding, by the network device, the first packet when the network device detects that the inbound interface for receiving the first packet is consistent with the outbound interface for sending the first packet.

9. The method according to claim 7 or 8, wherein the second identifier is carried in a flags Flags field of a segment routing header SRH of the first packet.

10. The method according to any one of claims 1 to 9, wherein the detecting, by the network device, a status of a target path based on the first packet comprises:
when the network device receives the first packet from the second node, determining, by the network device, that the status of the target path is normal; or
when the network device does not receive the first packet from the second node, determining, by the network device, that the status of the target path is faulty.

11. The method according to any one of claims 1 to 10, wherein the first packet is a bidirectional forwarding detection BFD protocol packet, or the first packet is a seamless bidirectional forwarding detection SBFD protocol packet.

12. A network device, comprising:
a transceiver module, configured to obtain, by the network device, a first packet, wherein
the first packet comprises a segment list, the segment list comprises a plurality of sequentially arranged segment identifiers SIDs, the segment list identifies a forwarding path of the first packet, and the segment list comprises a segment identifier of a first node and a segment identifier of a second node; and
the transceiver module is further configured to forward the first packet based on the segment list; and
a processing module, configured to detect a status of a target path based on the first packet, wherein the target path is a shortest path between the first node and the second node, and a segment identifier that is in the segment list and that identifies the target path indicates a loose path.

13. The network device according to claim 12, wherein
the first packet further comprises a first identifier, the first identifier indicates to discard the first packet after N hops of transmission, and N is a positive integer; and
a value of the first identifier is decreased by 1 each time the first packet is transmitted by one hop, and when the value of the first identifier is 0, the network device discards the first packet.

14. The network device according to claim 13, wherein
the transceiver module is further configured to obtain a total hop count of the target path; and
the processing module is further configured to determine the value N of the first identifier based on the total hop count of the target path, wherein N is greater than or equal to the total hop count of the target path.

15. The network device according to claim 13 or 14, wherein
the transceiver module is further configured to obtain a second packet, wherein the second packet comprises the segment list; and
the processing module is further configured to fill the first identifier in the second packet, to generate the first packet.

16. The network device according to any one of claims 13 to 15, wherein
the processing module is further configured to perform committed access rate CAR-based control on the first packet, wherein a CAR-based control indicates that a threshold of a transmission rate of the first packet per unit time is M, and M is a positive integer.

17. The network device according to any one of claims 13 to 16, wherein
the first identifier is carried in a time to live TTL field of an internet protocol version 4 IPv4 header of the first packet; or
the first identifier is carried in a hop limit Hop limit field of an internet protocol version 6 IPv6 header of the first packet.

18. The network device according to claim 13, wherein
the first packet further comprises a second identifier, and the second identifier indicates the network device to detect whether an inbound interface for receiving the first packet is consistent with an outbound interface for sending the first packet.

19. The network device according to claim 18, wherein
the processing module is further configured to detect, based on the second identifier, whether the inbound interface for receiving the first packet is consistent with the outbound interface for receiving the first packet; and
the transceiver module is further configured to discard, by the network device, the first packet when the network device detects that the inbound interface for receiving the first packet is consistent with the outbound interface for sending the first packet; or
the transceiver module is further configured to forward, by the network device, the first packet based on the segment list when the network device detects that the inbound interface for receiving the first packet is inconsistent with the outbound interface for sending the first packet.

20. The network device according to claim 18 or 19, wherein the second identifier is carried in a flags Flags field of a segment routing header SRH of the first packet.

21. The network device according to any one of claims 12 to 20, wherein
the processing module is further configured to: when the network device receives the first packet from the second node, determine, by the network device, that the status of the target path is normal; or
the processing module is further configured to: when the network device does not receive the first packet from the second node, determine, by the network device, that the status of the target path is faulty.

22. The network device according to any one of claims 12 to 21, wherein the first packet is a bidirectional forwarding detection BFD protocol packet, or the first packet is a seamless bidirectional forwarding detection SBFD protocol packet.

23. A communication apparatus, comprising:
a communication interface; and
a processor connected to the communication interface, wherein based on the communication interface and the processor, the communication apparatus is enabled to perform the method according to any one of claims 1 to 11.

24. A communication system, wherein the communication system comprises a communication apparatus, and the communication apparatus is configured to perform the method according to any one of claims 1 to 11.

25. A computer-readable storage medium, comprising instructions, wherein when the instructions are executed by a processor, the method according to any one of claims 1 to 11 is implemented.

26. A computer program product, comprising a program, wherein when the program is executed by a processor, the method according to any one of claims 1 to 11 is implemented.
